# EUROPÄISCHE PATENTSCHRIFT

(11) **EP 2 438 097 B1**
(45) Veröffentlichungstag und Bekanntmachung des Hinweises auf die Patenterteilung: **03.04.2013**
(21) Anmeldenummer: 10724434.5
(22) Anmeldetag: 01.06.2010
(51) Int. Cl.: D21H 21/16, C08F 220/18, C08F 2/28, C08F 220/56, C08F 257/02, C08F 285/00, C09J 151/00, C08F 220/06, C08F 220/34

(54) **FEINTEILIGE, KATIONISCHE, WÄSSRIGE POLYMERDISPERSIONEN, VERFAHREN ZU IHRER HERSTELLUNG UND IHRE VERWENDUNG**
FINE-PARTICLE, CATIONIC, AQUEOUS POLYMER DISPERSIONS, METHOD FOR THE PRODUCTION THEREOF, AND USE THEREOF
DISPERSIONS AQUEUSES DE POLYMÈRES CATIONIQUES EN FINES PARTICULES, LEUR PROCÉDÉ DE PRÉPARATION ET LEUR UTILISATION

(30) Priorität: 04.06.2009 EP 09161929
(43) Veröffentlichungstag der Anmeldung: 11.04.2012
(73) Patentinhaber: BASF SE, 67056 Ludwigshafen (DE)
(72) Erfinder: SONG, Anja, 68167 Mannheim (DE); KERN, Holger, 74912 Kirchardt (DE)
(74) Vertreter: Peatfield, Jeremy William
(86) Internationale Anmeldenummer: PCT/EP2010/057615
(87) Internationale Veröffentlichungsnummer: WO 2010/139683

(56) Entgegenhaltungen:
- WO-A1-2005/121195
- WO-A2-2008/071690

## Beschreibung

Die Erfindung betrifft feinteilige, kationische, wässrige Polymerdispersionen, die durch eine zweistufige Polymerisation erhältlich sind, wobei man in der ersten Polymerisationsstufe ein kationisches Vorpolymerisat als Dispergiermittel herstellt und anschließend in einer wässrigen Lösung dieses Vorpolymerisats in Gegenwart von ethylenisch ungesättigten Monomeren eine Emulsionspolymerisation durchführt, Verfahren zu ihrer Herstellung und ihre Verwendung als Leimungsmittel für Papier, Pappe und Karton.

Aus der DE 24 52 585 A1 sind wässrige Copolymerisat-Dispersionen bekannt, die durch eine zweistufige Polymerisation in wässriger Phase erhältlich sind, wobei man zunächst ein Copolymerisat aus einem säuregruppenhaltigen Monomer und einem ethylenisch ungesättigten Monomer mit einer tertiären oder quaternären Aminogruppe oder einer Stickstoff enthaltenden heterocyclischen Gruppe in wässriger Phase copolymerisiert und dann unter weiterer Copolymerisation Styrol und/oder Acrylnitril und gegebenenfalls (Meth)acrylsäureester sowie gegebenenfalls weitere olefinisch ungesättigte Monomere zufügt und auspolymerisiert. Die so hergestellten Polymerdispersionen werden als Leimungsmittel für Papier verwendet.

Aus der DE 24 54 397 A1 sind kationische wässrige Copolymerisat-Dispersionen bekannt, die durch Emulsions-Copolymerisation olefinisch ungesättigter Monomere in Gegenwart kationischer polymerer Dispergiermittel/Schutzkolloide hergestellt werden. Dazu wird ein Vorpolymerisat durch Lösungspolymerisation von hydrophoben ethylenisch ungesättigten Monomeren mit Monomeren, die quaternäre oder ternäre Stickstoffe enthalten, in mit Wasser mischbaren Lösemitteln, vorzugsweise Alkohole oder Aceton, synthetisiert. Nach Zugabe von Wasser und Ameisensäure, um tertiäre Aminogruppen zu protonieren, werden anschließend in der wässrigen Lösung des Vorpolymerisats nach Art einer Emulsionspolymerisation hydrophobe Monomere wie Styrol, Acrylnitril, (Meth)acrylsäureester und/oder Butadien, gegebenenfalls mit bis zu 10 Gew.-% an α,β-monoolefinisch ungesättigten Carbonsäuren copolymerisiert. Die Monomere werden so gewählt, dass die Glastemperatur des Copolymerisates zwischen -15 und +60 °C liegt. Die so erhältlichen Dispersionen werden als Überzugsmittel für Papier, Leder oder textile Flächengebilde und als Leimungsmittel für Papier verwendet.

In der EP 0 051 144 A1 werden amphotere, feinteilige, wässrige Polymerdispersionen beschrieben, die durch eine zweistufige Polymerisation hergestellt werden. In der ersten Stufe der Herstellung wird in einer Lösungscopolymerisation in einem mit Wasser mischbaren Lösemittel ein niedermolekulares Vorpolymerisat synthetisiert, wobei die verwendete Monomermischung neben weiteren Monomeren, jeweils pro Mol eines stickstoffhaltigen Monomers, das eine Aminogruppe und/oder eine quartäre Aminogruppe trägt, 0,5 Mol bis 1,5 Mol einer ethylenisch ungesättigten Carbonsäure enthält. Das Vorpolymerisat wird anschließend in Wasser dispergiert und in einer Emulsionspolymerisation mit nichtionischen, ethylenisch ungesättigten Monomeren unter Verwendung üblicher wasserlöslicher Initiatoren umgesetzt. Die erhaltenen Dispersionen werden als Masse- und Oberflächenleimungsmittel für Papier verwendet.

Aus der EP 0 058 313 A1 sind kationische Leimungsmittel für Papier bekannt, die dadurch erhältlich sind, dass man zunächst ein wasserlösliches kationisches Terpolymer bestehend aus N,N-Dimethylaminoethylacrylat und/oder -methacrylat, Styrol und Acrylnitril durch Lösungspolymerisation in einem Alkohol herstellt. Nach einer sich anschließenden Quarternisierungsreaktion sollen mindestens 10 % der enthaltenen N,N-Dimethylaminogruppen quaternisiert und die restlichen protoniert vorliegen. Dieses Terpolymerisat wird als Emulgator bei der sich daran anschließenden radikalisch initiierten Emulsionspolymerisation eines Monomergemisches von Acrylnitril/Methacrylnitril und (Meth)acrylsäureestern eingesetzt.

In der US 4,659,431 wird ein kationisches Leimungsmittel für Papier beschrieben, das ebenfalls nach einem zweistufigen Verfahren hergestellt wird. Zunächst wird ein Terpolymerisat hergestellt, indem man eine Monomermischung bestehend aus N,N-Dimethylaminoethylacrylat und/oder-methacrylat, Styrol und Acrylnitril nach Art einer Lösungspolymerisation in einem Alkohol polymerisiert. Nachfolgend werden mindestens 10 % der N,N-Dimethylamino-Gruppen quaternisiert, während die restlichen in protonierter Form vorliegen. Das Terpolymerisat wird als Emulgator bei der radikalisch initiierten Emulsionspolymerisation einer Monomermischung verwendet, die bis zu 90 Gew.-% Acrylnitril und /oder Methacrylnitril, 5 bis 95 Gew.-% Styrol und 5 bis 95 Gew.-% (Meth)acrylsäureester enthält.

Aus der EP 1 180 527 A1 sind kationische, feinteilige, wässrige Polymerdispersionen bekannt, die als Masse- und Oberflächenleimungsmittel für Papier verwendet werden. Die Herstellung der Dispersion erfolgt ebenfalls in einem zweistufigen Verfahren, bei dem zunächst in einer gesättigten C₁- bis C₆-Carbonsäure ein Lösungspolymerisat synthetisiert wird, das anschließend in einer Emulsionspolymerisation eines gegebenenfalls substituierten Styrols und eines (Meth)acrylsäureesters eingesetzt wird. Die Emulsionspolymerisation wird unter Verwendung üblicher, wasserlöslicher Initiatoren, z.B. Peroxide zusammen mit Redox-Systemen, durchgeführt.

Aus der WO 05/121195 A1 sind weitere feinteilige, amphotere , wässrige Polymerdispersionen bekannt, die sich als Leimungsmittel für Papier, Pappe und Karton eignen. Diese Dispersionen werden ebenfalls in einem zweistufigen Verfahren hergestellt. Zunächst wird ein Vorpolymerisat aus einem (Meth)acrylsäureester und/oder (Meth)acrylamid mit einer freien, protonierten und/oder quaternisierten Aminogruppe, einem gegebenenfalls substituierten Styrol, gegebenenfalls Acrylnitril und/oder Methacrylnitril, ein Säuregruppen enthaltendes ethylenisch ungesättigtes Monomer sowie gegebenenfalls ein davon verschiedenes nichtionisches ethylenisch ungesättigtes Monomer hergestellt. Eine wässrige Lösung des so erhaltenen Vorpolymerisats wird anschließend einer Emulsionspolymerisation mit mindestens einem nichtionischen ethylenisch ungesättigten Monomer unterworfen. Diese mindestens eine ethylenisch ungesättigte Monomer kann ein gegebenenfalls substituiertes Styrol, ein C₁- bis C₁₈-(Meth)acrylsäureesters und gegebenenfalls davon verschiedenen nichtionischen, ethylenisch ungesättigten Monomeren sein.

WO 08/071690 A1 beschreibt eine weitere feinteilige, kationische Polymerdispersion, die ebenfalls als Leimungsmittel für Papier, Pappe und Karton eingesetzt wird. In dem zweistufigen Verfahren wird zunächst ein Vorpolymerisat aus einem (Meth)acrylsäureester, einem gegebenenfalls substitutierten Styrol, gegebenenfalls Acrylnitril oder (Meth)acrylnitril, eine ethylenisch ungesättigte Carbonsäure oder Carbonsäureanhydrid und gegebenenfalls ein davon verschiedenes, ethylenisch ungesättigtes Monomer hergestellt. Eine wässrige Lösung des Vorpolymerisats wird anschließend in einer Emulsionspolymerisation mit Acrylnitril und/oder Methacrylnitril, einem C₁- bis C₄- Acrylsäure- oder Methacrylsäureester, einem C₆- bis C₁₄- Acrylsäure- oder Methacrylsäureester und gegebenenfalls davon verschiedenen, nichtionischen Monomeren umgesetzt.

Es besteht jedoch ein kontinuierlicher Bedarf in der Papierindustrie an neuen, wirksameren Masse- und Oberflächenleimungsmittein für die Herstellung von Papier, Pappe und Karton.

Der vorliegenden Erfindung lag daher die Aufgabe zugrunde, weitere Polymerdispersionen zur Verfügung zu stellen, die gegenüber den bekannten Polymerdispersionen eine verbesserte Wirksamkeit als Leimungsmittel für Papier haben.

Die Aufgabe wird erfindungsgemäß gelöst mit feinteiligen, kationischen, wässrigen Polymerdispersionen, die erhältlich sind durch Emulsionspolymerisation von ethylenisch ungesättigten Monomeren in einer wässrigen Lösung eines kationischen Vorpolymerisats als Dispergiermittel, wobei zunächst das kationische Vorpolymerisat in Gegenwart von Polymerisationsinitiatoren durch Polymerisieren von
a) 15 bis 40 Gew.-% einer Mischung von mindestens zwei verschiedenen (Meth)acrylsäureestern, die jeweils eine Aminogruppe und/oder quartäre Ammoniumgruppe aufweisen, und/oder (Meth)acrylamiden, die jeweils eine Aminogruppe und/oder quartäre Ammoniumgruppe tragen,
b) 40 bis 85 Gew.-% mindestens eines gegebenenfalls substituierten Styrols,
c) 0,5 bis 5 Gew.-% mindestens eines Säuregruppen enthaltenden ethylenisch ungesättigten Monomers und
d) 0 bis 20 Gew.-% mindestens eines von (b) verschiedenen, nichtionischen, ethylenisch ungesättigten Monomers,
wobei die Summe aus (a) + (b) + (c) + (d) = 100 Gew.-% ergibt,
in einer Lösungspolymerisation in einem mit Wasser teilweise bis vollständig mischbaren Lösemittel hergestellt wird, die Lösung/Dispersion des Vorpolymerisats dann mit Wasser versetzt wird und anschließend in der wässrigen Lösung des Vorpolymerisats eine Emulsionspolymerisation in Gegenwart von Polymerisationsinitiatoren eines Monomerengemisches aus
(i) 0 bis 29 Gew.-% mindestens eines gegebenenfalls substituierten Styrols,
(ii) 50 bis 100 Gew.-% mindestens eines C₁- bis C₁₈-(Meth)acrylsäureesters,
(iii) 0 bis 30 Gew.-% mindestens eines Vinylesters linearer oder verzweigter C₁-C₃₀-Carbonsäuren und
(iv) 0 bis 30 Gew.-% mindestens eines von (i), (ii) und (iii) verschiedenen, nichtionischen ethylenisch ungesättigten Monomers,
wobei die Summe aus (i) + (ii) + (iii) + (iv) = 100 Gew.-% ergibt,
und die Lösungspolymerisation und/oder Emulsionspolymerisation in Gegenwart von 0 bis 10 Gew.-% mindestens eines Polymerisationsreglers durchgeführt wird.

Die molare Menge der kationischen und/oder basischen Monomeren (a), die in das Vorpolymerisat eingebaut wird, ist selbstverständlich immer höher als die Menge der anionischen Monomeren (c), damit das Vorpolymerisat kationisch ist.

Das kationische Vorpolymerisat, das als Dispergiermittel bzw. Schutzkolloid für die Emulsionspolymerisation fungiert, wird in einer ersten Stufe der Polymerisation hergestellt. Es handelt sich hierbei um ein Lösungspolymerisat, das gegebenenfalls längere Zeit gelagert werden kann. Üblicherweise verwendet man es unmittelbar nach seiner Herstellung in der zweiten Stufe der Polymerisation als Dispergiermittel.

Das kationische Vorpolymerisat ist erhältlich durch Polymerisieren der obengenannten Monomermischungen (a), (b), (c) und gegebenenfalls (d) in Gegenwart mindestens eines Polymerisationsinitiators.

Für die Herstellung des Vorpolymerisats verwendet man als Monomere der Gruppe (a) eine Mischung von mindestens zwei verschiedenen, kationischen oder basischen (Meth)acrylsäureestern, die jeweils eine Aminogruppe und/oder quartäre Ammoniumgruppe aufweisen, und/oder verschiedenen, kationischen oder basischen (Meth)acrylamiden, die jeweils eine Aminogruppe und/oder quartäre Ammoniumgruppe tragen. Selbstverständlich können sowohl nur Mischungen von mindestens zwei verschiedenen (Meth)acrylsäureestern als auch von mindestens zwei verschiedenen (Meth)acrylamiden eingesetzt werden. Es ist auch möglich, dass eine Mischung von mindestens einem (Meth)acrylsäureester und mindestens einem (Meth)acrylamid verwendet wird.

Das Vorpolymerisat, das in der ersten Polymerisationsstufe hergestellt wird, enthält als Komponente (a) stickstoffhaltige Monomere, die eine Aminogruppe und/oder eine quartäre Ammoniumgruppe tragen.

Derartige Verbindungen mit einer Aminogruppe sind solche der allgemeinen Formel (I): 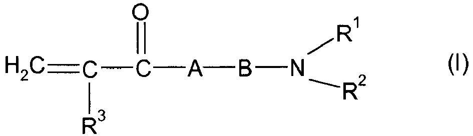 in der
A = O, NH,
B = CₙH₂ₙ, mit n = eine ganze Zahl im Bereich von 1 bis 8,
R¹, R² = CₘH₂ₘ₊₁, m = eine ganze Zahl im Bereich von 1 bis 4 und R³ = H, CH₃
bedeuten.

Die Verbindungen mit quartären Ammoniumgruppen können mit Hilfe der folgenden Formel (II) charakterisiert werden: 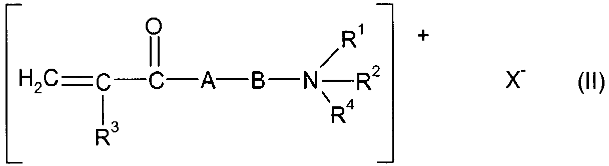 in der
X- = OH-, Cl-, Br, CH₃-OSO³⁻,
R₄ = CₘH₂ₘ₊₁, m = eine ganze Zahl im Bereich von 1 bis 4, und
die übrigen Substituenten die zuvor genannte Bedeutung haben,
bedeuten.

Die Verbindungen der Formel (II) werden in der Regel als kationische Monomere, die der Formel (I) als basische Monomere bezeichnet. Basische, ethylenisch ungesättigte Monomere sind beispielsweise Acrylsäure- und Methacrylsäureester von Aminoalkoholen, z.B. N,N-Dimethylaminoethylacrylat, N,N-Dimethylaminoethylmethacrylat, N,N-Diethylaminoethylacrylat, N,N-Diethylaminoethylmethacrylat, N,N-Dimethylaminopropylacrylat, N,N-Dimethylaminopropylmethacrylat, N,N-Dibutylaminopropylacrylat, N,N-Dibutylaminopropylmethacrylat, N,N-Dimethylaminoneopentylacrylat, Aminogruppen enthaltende Derivate des Acrylamids oder Methacrylamids, wie N,N-Dimethylaminoethylacrylamid, N,N-Dimethylaminoethylmethacrylamid, N,N-Dimethylaminopropylacrylamid und N,N-Dimethylaminopropylmethacrylamid

Die quartären Verbindungen der Formel (II) werden erhalten, indem man die basischen Monomere der Formel (I) mit bekannten Quaternisierungsmitteln umsetzt, z.B. mit Methylchlorid, Benzylchlorid, Ethylchlorid, Butylbromid, Dimethylsulfat und Diethylsulfat oder Epichlorhydrin. Diese Monomere verlieren in der quartären Form ihren basischen Charakter. Als Beispiele seien genannt: N,N,N-Trimethylammoniumethylacrylat-Chlorid, N,N,N-Trimethylammoniumethylmethacrylat-Chlorid, N,N,N-Trimethylammoniumethylmethacrylamid-Chlorid, N,N,N-Trimethylammoniumpropylacrylamid-Chlorid, N,N,N-Trimethylammoniumpropylmethacrylamid-Chlorid, N,N,N-Trimethylammoniumethylacrylamid-Chlorid, sowie die entsprechenden Methosulfate und Sulfate.

Vorzugsweise sind die Monomere der Gruppe (a) aus gewählt aus N,N-Dimethylaminopropylmethacrylamid, N,N-Dimethylaminoethylmethacrylat und N,N-Dimethylaminoethylacrylat, jeweils in Form des Salzes mit mindestens einer Mineralsäure oder Carbonsäure und/oder in quartärer Form eingesetzt. Bevorzugt in Betracht kommendes Quaternisierungsmittel ist Methylchlorid.

Die Monomere der Gruppe (a) werden bei der Herstellung des Vorpolymerisats in einer Menge von 15 bis 40 Gew.-%, vorzugsweise von 20 bis 35 Gew.-%, bezogen auf die Monomerenmischung (a) bis (d), eingesetzt.

Für die Herstellung des Vorpolymerisats verwendet man als Monomere der Gruppe (b) gegebenenfalls substituierte Styrole wie Styrol, α-Methylstyrol oder Ethylstyrol. Die Monomere der Gruppe (b) sind zu 40 bis 70 Gew.-%, vorzugsweise 50 bis 70 Gew.-%, in der Monomermischung aus (a) bis (d) enthalten.

Beispiele für Monomere der Gruppe (c) sind ethylenisch ungesättigte C₃- bis C₆-Carbonsäuren wie Acrylsäure, Methacrylsäure, Maleinsäure, Fumarsäure, Itaconsäure, Ethacrylsäure, Crotonsäure, Monoester von ethylenisch ungesättigten Dicarbonsäuren wie Monomethylmaleinat, Monomethylfumarat, Monoethylmaleinat, Monoethylfumarat Monopropylmaleinat, Monopropylfumarat, Mono-n-butylmaleinat und Mono-n-butylfumarat sowie Styrolcarbonsäuren und ethylenisch ungesättigte Anhydride wie Maleinsäureanhydrid und Itaconsäureanhydrid. In Abhängigkeit vom Wassergehalt des in der ersten Polymerisationsstufe eingesetzten Lösemittels werden die Anhydridgruppen der Monomere zu Carboxylgruppen hydrolysiert. Die Anhydridgruppen werden in jedem Fall vor der zweiten Polymerisationsstufe hydrolysiert, wenn nämlich die in der ersten Polymerisationsstufe erhaltene Polymerlösung mit Wasser verdünnt wird. Außerdem eignen sich als Monomere (c) Sulfonsäure- und Phosphonsäuregruppen enthaltende Monomere wie 2-Acrylamido-2-methylpropansulfonsäure und Vinylphosphonsäure. Die Säuregruppen enthaltenden Monomere können in Form der freien Säuregruppen sowie in teilweise oder vollständig mit Alkalimetallbasen, Erdalkalimetallbasen, Ammoniak und/oder Aminen neutralisierter Form eingesetzt werden. Zur Neutralisation der Säuregruppen der Monomere verwendet man beispielsweise Natronlauge, Kalilauge, Soda, Natriumhydrogencarbonat, Ammoniak, Trimethylamin, Triethylamin, Morpholin, Ethanolamin, Diethanolamin, Triethanolamin oder Diethylentriamin. Es ist selbstverständlich möglich, zwei oder mehrere Basen als Neutralisierungsmittel einzusetzen. Vorzugsweise werden aus dieser Monomergruppe Acrylsäure und Methacrylsäure oder Mischungen aus Acrylsäure und Methacrylsäure in beliebigem Verhältnis eingesetzt. Die Monomere der Gruppe (c) sind in einer Menge von 0,5 bis 5 Gew.-%, vorzugsweise 0,7 bis 3,5 Gew.-% in der Monomermischung aus (a) bis (d) enthalten.

Die zur Herstellung des Vorpolymerisats verwendeten Monomermischungen können gegebenenfalls nichtionische, ethylenisch ungesättigte Monomere (d) enthalten, die von den Monomeren (b) verschieden sind. Beispiele für solche Monomere sind Amide wie beispielsweise Acrylamid, Methacrylamid, N-Methylacrylamid, N-Methylmethacrylamid, N-Ethylacrylamid und N-Ethylmethacrylamid; Vinylverbindungen wie Vinylacetat, Vinylpropionat oder Vinylformamid; C₁- bis C₁₈-(Meth)acrylsäureester wie beispielsweise Methylacrylat, Methylmethacrylat, Ethylacrylat, Ethylmethacrylat, Propylacrylat, Propylmethacrylat, Isopropylacrylat, Isopropylmethacrylat, n-, iso- und tert.-Butylacrylat, n-, iso- und tert.-Butylmethacrylat, Hexylacrylat, Hexylmethacrylat, Ethylhexylacrylat, Ethylhexylmethacrylat, Cyclohexylacrylat, Cyclohexylmethacrylat, n-Decylacrylat, Decylmethacrylat, Laurylacrylat, Laurylmethacrylat, Stearylacrylat, Stearylmethacrylat oder Ester der Acrylsäure bzw. Methacrylsäure, die durch Umsetzung mindestens einer Ethylenoxideinheit hergestellt wurden, beispielsweise Hydroxyethylmethacrylat oder Diethylenglykolmonomethacrylat. Es ist selbstverständlich möglich, auch Mischungen der genannten Monomere zu verwenden. Falls die Monomere der Gruppe (d) verwendet werden, so sind sie in einer Menge bis zu 20 Gew.-%, meistens in einer Menge bis zu 10 Gew.-%, bezogen auf die Gesamtmenge der Monomere (a) bis (d) in der Monomermischung enthalten.

Die Summe der Angaben in Gew.-% für die Monomere (a) bis (d) beträgt immer 100.

Bevorzugt werden feinteilige, kationische Polymerdispersionen, worin das kationische Vorpolymerisat durch Polymerisieren von
(a) 15 bis 40 Gew.-% einer Mischung aus mindestens zwei Verbindungen ausgewählt aus N,N-Dimethylaminopropylmethacrylamid, N,N-Dimethylaminoethylmethacrylat und N,N-Dimethylaminoethylacrylat,
(b) 40 bis 85 Gew.-% Styrol, und
(c) 0,5 bis 5 Gew.-% Acrylsäure und/oder Methacrylsäure
erhältlich ist.

In der ersten Polymerisationsstufe werden die Monomere (a) bis (d) nach Art einer Lösungspolymerisation in einem mit Wasser teilweise bis vollständig mischbaren Lösemittel, das bis zu 15 Gew.-% Wasser enthalten kann, polymerisiert. Vorzugsweise setzt man praktisch wasserfreie Lösemittel ein. Die Lösemittel enthalten meistens bis zu ca. 1 Gew.-% Wasser. Beispiele für geeignete Lösemittel sind C₁- bis C₃-Carbonsäuren wie Ameisensäure, Essigsäure und Propionsäure, Alkohole wie Methanol, Ethanol, Propanol und Isopropanol, Ketone wie Aceton und Methylethylketon, Amide wie Dimethylformamid sowie Dimethylsulfoxid, Carbonate wie Propylen- oder Ethylencarbonat und Tetrahydrofuran. Falls man säuregruppenfreie Lösemittel einsetzt, neutralisiert man die Säuregruppen enthaltenden Monomere (c) vorzugsweise vor der Polymerisation. In der ersten Polymerisationsstufe verwendet man vorzugsweise wasserfreie Ameisensäure, wasserfreie Essigsäure oder Isopropanol. Die übrigen Reaktionsteilnehmer werden dann bevorzugt ebenfalls in wasserfreier Form eingesetzt.

Die Lösungspolymerisation in der ersten Polymerisationsstufe erfolgt in Gegenwart von Polymerisationsinitiatoren, die unter den Polymerisationsbedingungen Radikale bilden, bei Temperaturen in dem Bereich von 20 bis 160 °C, vorzugsweise 60 bis 120 °C. Falls die Polymerisationstemperatur oberhalb des Siedepunktes des eingesetzten Lösemittels liegen sollte, führt man die Polymerisation unter erhöhtem Druck beispielsweise in einem mit einem Rührer ausgestatteten Autoklaven durch. Vorzugsweise verwendet man solche Initiatoren, die sich in dem organischen, mit Wasser mischbaren Lösemittel lösen, beispielsweise Azoisobuttersäuredinitril, tert.-Butylperoctoat, tert.-Butylperbenzoat, Benzoylperoxid, tert.-Butylperpivalat, Lauroylperoxid, Di-tert.-Butylperoxid, tert.-Butylhydroperoxid sowie Wasserstoffperoxid gegebenenfalls in Gegenwart von Schwermetallkationen wie beispielsweise Kationen von Eisen, Cer oder Mangan.

Die Monomere werden in der ersten Polymerisationsstufe in Bezug auf das Lösemittel in einer solchen Menge eingesetzt, dass man Polymerlösungen mit einem Polymergehalt von 15 bis 70 Gew.-%, vorzugsweise 30 bis 65 Gew.-% erhält. Die Polymere sind in dem organischen, mit Wasser teilweise bis vollständig mischbaren Lösemittel vorzugsweise klar löslich. Die in der ersten Stufe hergestellten Lösungspolymerisate werden als Dispergiermittel/Schutzkolloid oder evtl. als Saat für die nachfolgende Emulsionspolymerisation benutzt. Dazu ist es erforderlich, zur Lösung des Vorpolymerisats Wasser hinzuzugeben bzw. die Polymerlösung in Wasser einzubringen. Man erhält eine wässrige Polymerlösung, die auch disperse Anteile enthalten kann (kolloidale Lösung), aus der das organische, mit Wasser teilweise bis vollständig mischbare Lösemittel gegebenenfalls unter vermindertem Druck abdestilliert werden kann.

Die in der ersten Stufe hergestellten kationischen Vorpolymerisate haben eine relativ niedrige Molmasse, z.B. Mw von 1000 bis 100000, vorzugsweise 5000 bis 50000 (bestimmt durch Lichtstreuung). Die Bestimmung der Molgewichtsverteilung und des massenmittleren Molgewichtes kann durch dem Fachmann bekannte Methoden wie beispielsweise Gelpermeationschromatographie, Lichtstreuung oder Ultrazentrifugation durchgeführt werden.

Die Konzentration des in der ersten Polymerisationsstufe hergestellten Lösungspolymerisats in der mit Wasser versetzten Polymerlösung beträgt beispielsweise 2 bis 35, vorzugsweise 15 bis 25 Gew.-%. Die mit Wasser versetzte Lösung des Vorpolymerisats wird dann in der zweiten Stufe der Polymerisation als Vorlage bzw. Emulgator/Schutzkolloid oder evtl. als Saat für die Emulsionspolymerisation verwendet.

In der wässrigen Lösung des Vorpolymerisats erfolgt in einer zweiten Polymerisationsstufe die Herstellung des Emulsionspolymerisats. Hierfür polymerisiert man ein Monomergemisch aus
(i) 0 bis 29 Gew.-% mindestens eines gegebenenfalls substituierten Styrols,
(ii) 50 bis 100 Gew.-% mindestens eines C₁- bis C₁₈-(Meth)acrylsäureesters,
(iii) 0 bis 30 Gew.-% mindestens eines Vinylesters linearer oder verzweigter C₁-C₃₀-Carbonsäuren und
(iv) 0 bis 30 Gew.-% eines von den Monomeren (i), (ii) und (iii) verschiedenen nichtionischen Monomers,
wobei die Summe aus (i) + (ii) + (iii) + (iv) = 100 Gew.-% ergibt.

Die Monomere der Gruppe (i) entsprechen denen der Gruppe (b) aus dem kationischen Vorpolymerisat.

Zu den Monomeren der Gruppe (ii) gehören (Meth)acrylsäureester von C₁- bis C₁₈- Alkoholen. Monomere (ii) sind beispielsweise Methylacrylat, Ethylacrylat, n-Propylacrylat, Isopropylacrylat, n-Butylacrylat, sek.-Butylacrylat, Isobutylacrylat, tert.-Butylacrylat, Ethylhexylacrylat, n-Octylacrylat, Cyclohexylacrylat, Decylacrylat, Dodecylacrylat, Tetradecylacrylat, Methylmethacrylat, Ethylmethacrylat, n-Propylmethacrylat, Isopropylmethacrylat, n-Butylmethacrylat, sek.-Butylmethacrylat, Isobutylmethacrylat, tert.-Butylmethacrylat, Ethylhexylmethacrylat, n-Octylmethacrylat, Cyclohexylmethacrylat, Decylmethacrylat, Dodecylmethacrylat und Tetradecylmethacrylat. Aus dieser Gruppe von Monomeren setzt man vorzugsweise n-Butylacrylat und tert.-Butylacrylat jeweils allein oder in beliebigen Mischungen ein. In solchen Mischungen aus n-Butylacrylat und tert.-Butylacrylat beträgt das Gewichtsverhältnis üblicherweise 3:1 bis 1:3. Aber auch Ethylhexylacrylat und Ethylhexylmethacrylat kommen in Betracht.

Monomere der Gruppe (iii) sind Vinylester linearer oder verzweigter C₁-C₃₀-Carbonsäuren. Derartige Carbonsäuren sind gesättigt und unverzweigt, wie Ameisensäure, Essigsäure, Propionsäure, Buttersäure, Valeriansäure, Capronsäure (Hexansäure), Heptansäure, Caprylsäure (Octansäure), Pelargonsäure, Caprinsäure (Decansäure), Undecansäure, Laurylsäure (Dodecansäure), Tridecansäure, Myristinsäure (Tetradecansäure), Pentadecansäure, Palmitinsäure, Margarinsäure, Stearinsäure, Nonadecansäure, Arachinsäure, Behensäure, Lignocerinsäure (Tetracosansäure), Cerotinsäure, Melissinsäure (Triacontansäure). Erfindungsgemäß eignen sich auch gesättigte, verzweigte Carbonsäure wie beispielsweise Isobuttersäure, Isovaleriansäure (3-Methylbuttersäure) und Tubercolostearinsäure sowie stark verzweigte gesättigte Carbonsäure. Letztere sind unter dem Begriff Versatic-Säuren bekannt, wie beispielsweise Pivalinsäure, Neohexansäure, Neoheptansäure, Neooctansäure, Neononansäure und Neodecansäure. Geeignete Vinylester von linearen oder verzweigten C₁-C₃₀-Carbonsäuren sind beispielsweise Vinyllaurat, -stearat, Vinylpropionat, Versaticsäurevinylester, Vinylacetat, Propylheptansäurevinylester, Neodecansäurevinylester (VeoVa^{®} 10 der Firma Hexion Specialty Chemicals), Neononansäurevinylester (VeoVa^{®} 9 der Firma Hexion Specialty Chemicals) sowie Vinylpelargonat.

Als Monomere der Gruppe (iv) eignen sich beispielsweise Acrylamid, Methacrylamid, N-Methylolacrylamid, N-Methylolmethacrylamid, N-C₁- bis C₁₈-Alkylacrylamide, N-C₁- bis C₁₈-Alkylmethacrylamide, N-Vinylamide, C₁- bis C₁₈-Alkylvinylether, Hydroxyalkyl-ester sowie Ester von monoethylenisch ungesättigten Mono- und Dicarbonsäuren mit C₂-C₄-Polyalkylenglykolen.

Zu den Monomeren der Gruppe (iv) zählen weiterhin die schon unter (a) genannten monoethylenisch ungesättigte Monomere, die wenigstens eine im wässrigen Medium protonierbare Aminogruppe und/oder eine quartäre Ammoniumgruppe aufweisen.

Außerdem können als Monomere (iv) auch vernetzend wirkende Monomere eingesetzt werden. Beispiele für solche Vernetzer sind Butandioldiacrylat, Butandioldimethacrylat, Hexandioldiacrylat, Hexandioldimethacrylat, Glykoldiacrylat, Glykoldimethacrylat, Trimethylolpropantriacrylat, Trimethylolpropantrimethacrylat, Pentaerythrittriacrylat, Pentaerythrittetraacrylat, Diacrylate und Dimethacrylate von alkoxylierten zweiwertigen Alkoholen, Divinylharnstoff und/oder konjugierte Diolefine wie Butadien oder Isopren.

Je nach Anwendungszweck können die Monomeren der Gruppe (iv) auch sogenannte funktionale Monomere umfassen, d.h. Monomere, die neben einer polymerisierbaren C=C-Doppelbindung auch noch eine reaktive funktionelle Gruppe aufweisen, beispielsweise eine Oxirangruppe, eine reaktive Carbonylgruppe, z.B. eine Acetoacetylgruppe, eine Isocyanat-Gruppe, eine N-Hydroxymethylgruppe, eine N-Alkoxymethylgruppe, eine Trialkylsilylgruppe, eine Trialkoxysilylgruppe oder eine sonstige, gegenüber Nucleophilen reaktive Gruppe.

Bevorzugt wird ein Monomerengemisch aus
(i) 0 bis 29 Gew.-% Styrol,
(ii) 71 bis 100 Gew.-% n-Butylacrylat, tert.-Butylacrylat oder Mischungen aus n-Butylacrylat und tert.-Butylacrylat im Gewichtsverhältnis 3:1 bis 1:3.

Die Polymerisation der Monomeren (i), (ii), gegebenenfalls (iii) und gegebenenfalls (iv) erfolgt nach der Methode einer Emulsionspolymerisation, d.h. die zu polymerisierenden Monomeren liegen in der Polymerisationsmischung als wässrige Emulsion vor. Zum Stabilisieren der Monomeremulsionen verwendet man die oben beschriebenen kationischen Vorpolymerisate.

Die Emulsionspolymerisation erfolgt meistens in dem Temperaturbereich von 40 bis 150, vorzugsweise 60 bis 90 °C in Gegenwart üblicher Mengen an vorzugsweise wasserlöslichen Polymerisationsinitiatoren. Meistens setzt man 0,2 bis 4, vorzugsweise 0,5 bis 2 Gew.-% mindestens eines Initiators, bezogen auf die zu polymerisierenden Monomere, ein. Als Initiatoren kommen beispielsweise Azoverbindungen, Peroxide, Hydroperoxide, Wasserstoffperoxid, anorganische Peroxide und Redox-Systeme wie Kombinationen von Wasserstoffperoxid und Ascorbinsäure oder tert.-Butylhydroperoxid und Ascorbinsäure in Betracht. Die Redox-Systeme können außerdem zur Aktivierung noch Schwermetallkationen wie Cer- Mangan- oder Eisen(II)-Ionen enthalten.

Bei der Emulsionspolymerisation kann man die Monomere entweder direkt in die Vorlage dosieren oder man kann sie in Form einer wässrigen Emulsion oder Miniemulsion dem Polymerisationsansatz zuführen. Um die Monomere in Wasser zu emulgieren kann man beispielsweise einen Teil des mit Wasser verdünnten Vorpolymerisates aus der ersten Polymerisationsstufe als Emulgator benutzen oder man emulgiert die Monomere mit Hilfe üblicher nichtionischer, anionischer, kationischer oder amphoterer Emulgatoren in Wasser.

Übliche Emulgatoren werden nur gegebenenfalls eingesetzt. Die angewendeten Mengen betragen beispielsweise 0,05 bis 3 Gew.-% und liegen vorzugsweise in dem Bereich von 0,5 bis 2 Gew.-%. Übliche Emulgatoren sind in der Literatur eingehend beschrieben, siehe beispielsweise M. Ash, I. Ash, Handbook of Industrial Surfactants, Third Edition, Synapse Information Resources. Inc.. Beispiele für übliche Emulgatoren sind die Umsetzungsprodukte von langkettigen einwertigen Alkoholen (C₁₀- bis C₂₂-Alkanole) mit 4 bis 50 Mol Ethylenoxid und/oder Propylenoxid pro Mol Alkohol oder ethoxylierte Phenole oder mit Schwefelsäure veresterte alkoxylierte Alkohole, die meistens in mit Alkalilaugen neutralisierter Form verwendet werden. Weitere übliche Emulgatoren sind beispielsweise Natriumalkylsulfonate, Natriumalkylsulfate, Natriumdodecylbenzolsulfonat, Sulfobernsteinsäureester, quartäre Alkylammoniumsalze, Alkylbenzylammoniumsalze, wie Dimethyl-C₁₂- bis C₁₈-alkylbenzylammoniumchloride, primäre, sekundäre und tertiäre Fettaminsalze, quartäre Amidoaminverbindungen, Alkylpyridiniumsalze, Alkylimidazoliniumsalze und Alkyloxazoliniumsalze. Bevorzugt werden jedoch keine Emulgatoren eingesetzt.

Die Dosierung der Monomere zur Durchführung der Emulsionspolymerisation kann dabei kontinuierlich oder diskontinuierlich erfolgen. Bei Verwendung einer Monomerenmischung kann die Dosierung der Monomere als Mischung oder getrennt bzw. in der Art einer Stufen- oder Gradientenfahrweise erfolgen. Dabei kann die Zugabe über den Dosierzeitraum gleichmäßig oder ungleichmäßig, d.h. mit wechselnder Dosiergeschwindigkeit erfolgen. Durch Zugabe einer Teilmenge des Monomers in die wässrige Lösung/Dispersion des Vorpolymerisates enthaltende Vorlage ist die Dosierung mittels einer Quellfahrweise möglich.

In einer bevorzugten Ausführungsform der vorliegenden Erfindung werden die Lösungspolymerisation und/oder die Emulsionspolymerisation in Gegenwart von Polymerisationsreglern durchgeführt. Geeignete Regler sind beispielsweise Mercaptane wie Ethylmercaptan, n-Butylmercaptan, tert.-Butylmercaptan, n- Dodecylmercaptan oder tert.-Dodecylmercaptan, Thioglykolsäure oder Kohlenstofftetrabromid. Des Weiteren sind geeignete Regler aus der Klasse der Terpene, bevorzugt aus der Klasse der monozyklischen Terpene, und besonders bevorzugt aus der Gruppe der Menthadiene. Unter den genannten Reglern der Gruppe der Menthadiene ist Terpinolen ganz besonders bevorzugt. Falls Polymerisationsregler eingesetzt werden, so betragen die Mengen an Regler beispielsweise 0,1 bis 10 Gew.-%, bevorzugt 0,5 bis 5 Gew.-%.

Der pH-Wert des Reaktionsgemisches liegt in der zweiten Polymerisationsstufe beispielsweise in dem Bereich von 1 bis 5 meistens beträgt er 2 bis 4.

Um die restlichen Monomeren möglichst weitgehend aus der Polymerdispersion zu entfernen, führt man nach Abschluss der eigentlichen Polymerisation zweckmäßigerweise eine Nachpolymerisation durch. Hierfür setzt man der Polymerdispersion nach Beendigung der Hauptpolymerisation beispielsweise einen Initiator aus der Gruppe Wasserstoffperoxid, Peroxide, Hydroperoxide und/oder Azostarter zu. Die Kombination der Initiatoren mit geeigneten Reduktionsmitteln, wie beispielsweise Ascorbinsäure oder Natriumbisulfit, ist ebenfalls möglich. Bevorzugt werden öllösliche, in Wasser schwerlösliche Initiatoren verwendet, z. B. übliche organische Peroxide wie Dibenzoylperoxid, Di-tert.-Butylperoxid, tert.-Butylhydroperoxid, Cumylhydroperoxid oder Biscyclohexylperoxidicarbonat eingesetzt. Zur Nachpolymerisation wird das Reaktionsgemisch beispielsweise auf eine Temperatur erhitzt, die der Temperatur entspricht, bei der die Hauptpolymerisation durchgeführt wurde oder die um bis zu 20 °C, vorzugsweise bis zu 10 °C niedriger liegt. Die Hauptpolymerisation ist beendet, wenn der Polymerisationsinitiator verbraucht ist bzw. der Monomerumsatz beispielsweise mindestens 98 %, vorzugsweise mindestens 99,5 % beträgt. Zur Nachpolymerisation wird vorzugsweise tert.-Butylhydroperoxid eingesetzt. Die Polymerisation wird beispielsweise in einem Temperaturbereich von 40 bis 110 °C, meistens 50 bis 105 °C durchgeführt.

In der zweiten Polymerisationsstufe erhält man feinteilige, wässrige Polymerdispersionen, die aufgrund der Zusammensetzung des Vorpolymerisats kationische Eigenschaften haben. Die mittlere Teilchengröße der dispergierten Teilchen beträgt beispielsweise 5 bis 250 nm, vorzugsweise <100 nm, besonders bevorzugt 10 bis 60 nm. Die mittlere Teilchengröße kann durch dem Fachmann bekannte Methoden wie beispielsweise Laserkorrelationsspektroskopie, Ultrazentrifugation oder CHDF bestimmt werden. Ein weiteres Maß für die Teilchengröße der dispergierten Polymerteilchen ist der LD-Wert. Zur Bestimmung des LD-Wertes (Lichtdurchlässigkeit) wird die jeweils zu untersuchende Polymerdispersion in 0,1 Gew.-%iger wässriger Einstellung in einer Küvette mit einer Kantenlänge von 2,5 cm mit Licht der Wellenlänge 600 nm vermessen. Aus den Messwerten kann die mittlere Teilchengröße errechnet werden, vgl. B. Verner, M. Bárta, B. Sedlácek, Tables of Scattering Functions for Spherical Particles, Prag 1976, Edice Marco, Rada D-DATA, SVAZEK D-1.

Die Polymerkonzentration der bei der Emulsionspolymerisation anfallenden wässrigen Dispersionen beträgt beispielsweise 15 bis 45, vorzugsweise 25 bis 35 Gew.-%.

Gegenstand der Erfindung ist auch ein Verfahren zur Herstellung der oben beschriebenen feinteiligen, kationischen, wässrigen Polymerdispersionen, die erhältlich sind durch Emulsionspolymerisation von ethylenisch ungesättigten Monomeren in einer wässrigen Lösung eines kationischen Vorpolymerisats als Dispergiermittel, wobei zunächst das kationische Vorpolymerisat in Gegenwart von Polymerisationsinitiatoren durch Polymerisieren von
(a) 15 bis 40 Gew.-% einer Mischung von mindestens zwei verschiedenen (Meth)acrylsäureestern, die jeweils eine Aminogruppe und/oder quartäre Ammoniumgruppe aufweisen, und/oder (Meth)acrylamiden, die jeweils eine Aminogruppe und/oder quartäre Ammoniumgruppe tragen,
(b) 40 bis 85 Gew.-% mindestens eines gegebenenfalls substituierten Styrols,
(c) 0,5 bis 5 Gew.-% mindestens eines Säuregruppen enthaltenden ethylenisch ungesättigten Monomers und
(d) 0 bis 20 Gew.-% mindestens eines von (b) verschiedenen, nichtionischen, ethylenisch ungesättigten Monomers,
wobei die Summe aus (a) + (b) + (c) + (d) = 100 Gew.-% ergibt,

in einer Lösungspolymerisation in einem mit Wasser teilweise bis vollständig mischbaren Lösemittel hergestellt wird, die Lösung/Dispersion des Vorpolymerisats dann mit Wasser versetzt wird und anschließend in der wässrigen Lösung des Vorpolymerisats eine Emulsionspolymerisation in Gegenwart von Polymerisationsinitiatoren eines Monomerengemisches aus
(i) 0 bis 29 Gew.-% mindestens eines gegebenenfalls substituierten Styrols,
(ii) 50 bis 100 Gew.-% mindestens eines C₁- bis C₁₈-(Meth)acrylsäureesters,
(iii) 0 bis 30 Gew.-% mindestens eines Vinylesters linearer oder verzweigter C₁-C₃₀-Carbonsäuren und
(iv) 0 bis 30 Gew.-% mindestens eines von (i), (ii) und (iii) verschiedenen, nichtionischen ethylenisch ungesättigten Monomers,
wobei die Summe aus (i) + (ii) + (iii) + (iv) = 100 Gew.-% ergibt,
und die Lösungspolymerisation und/oder Emulsionspolymerisation in Gegenwart von 0 bis 10 Gew.-% mindestens eines Polymerisationsreglers durchgeführt wird.

Die oben beschriebenen feinteiligen, kationischen wässrigen Polymerdispersionen werden als Leimungsmittel für Papier, Pappe und Karton verwendet. Sie können für die Herstellung sämtlicher Papiersorten verwendet werden, z.B. von Schreib- und Druckpapieren sowie Verpackungspapieren und Papieren für die Verpackung von Flüssigkeiten. Sie eignen sich dabei insbesondere für die Oberflächenleimung von Papierprodukten. Dabei können die erfindungsgemäßen Dispersionen mit allen bei der Oberflächenleimung geeigneten Verfahrensmethoden verarbeitet werden, sie können jedoch auch zur Masseleimung eingesetzt werden. Für die Anwendung als Leimungsmittel verdünnt man die wässrigen Polymerdispersionen durch Zugabe von Wasser meistens auf einen Polymergehalt von beispielsweise 0,05 bis 5 Gew.-%. Die Menge an Polymerdispersion richtet sich nach dem gewünschten Leimungsgrad der auszurüstenden Papiere oder Papierprodukte. Solche Präparationslösungen können gegebenenfalls weitere Stoffe enthalten z.B. Stärke, Farbstoffe, optische Aufheller, Biozide, Verfestiger für Papier, Fixiermittel, Entschäumer, Retentionsmittel und/oder Entwässerungsmittel.

Die Leimungsmitteldispersion kann auf Papier, Pappe oder Karton mittels einer Leimpresse oder anderen Auftragsaggregaten wie Filmpresse, Speedsizer oder Gate-roll aufgebracht werden. Die Menge an Polymer, die so auf die Oberfläche von Papierprodukten aufgetragen wird, beträgt beispielsweise 0,005 bis 1,0 g/m², vorzugsweise 0,01 bis 0,5 g/m².

Die erfindungsgemäßen Polymerdispersionen zeigen bereits bei sehr geringer Dosierung eine exzellente Leimungswirkung auf allen Papieren, hergestellt mit unterschiedlichen Fasertypen von ungebleichtem Nadelholz, ungebleichtem Laubholz, ungebleichtem Hartholz, gebleichtem Nadelholz, gebleichtem Laubholz, gebleichtem Hartholz, Deinking-Fasern oder Mischungen aus verschiedenen Fasertypen. Weiterhin zeigen die erfindungsgemäßen Dispersionen eine sehr gute Verträglichkeit mit den üblichen Stärken, zum Beispiel Kartoffelstärke, Maisstärke, Weizenstärke, Tapiokastärke. Außerdem zeigen die erfindungsgemäßen Dispersionen eine vollständige Leimungsausbildung unmittelbar nach der Herstellung und Trocknung der Papierbahn.

Die Erfindung wird anhand der folgenden, nicht einschränkenden Beispiele näher erläutert.

### Beispiele

Die Prozentangaben in den Beispielen bedeuten Gewichtsprozent, sofern aus dem Zusammenhang nichts anderes hervorgeht.

### Beispiel 1

In einem 21-Planschilffkolben mit Rührer und Innentemperaturmessung wurden 101,4 g wasserfreie Essigsäure (Eisessig) vorgelegt und unter Stickstoffatmosphäre auf 105 °C aufgeheizt. Unter Rühren wurden 165 g Styrol, 10 g N,N-Dimethylaminoethylacrylat, 55 g N,N-Dimethylaminopropylmethacrylamid sowie 5 g Acrylsäure in einem Zeitraum von 45 min bei 105 °C zudosiert. Zeitgleich mit dem Monomerzulauf wurde der Zulauf von 8,8 g tert.-Butylperoctoat in 18,2 g Isopropanol gestartet und innerhalb von 60 min zudosiert. Das Reaktionsgemisch wurde anschließend bei 105 °C für 60 min nachpolymerisiert.

Die homogene Polymermasse wurde dann bei 85 °C mit 870 g vollentsalztem Wasser versetzt. Nach Zugabe von 1,5 g 10 Gew.-%iger Eisen(II)sulfatlösung und 10 g 10 Gew.-%iger Ascorbinsäurelösung wurden 20 g 5 Gew.-%ige Wasserstoffperoxidlösung innerhalb von 30 min bei 80 °C zugegeben. Danach wurde bei 80 °C eine Mischung aus 40 g Styrol und 225 g tert.-Butylacrylat über einen Zeitraum von 120 min zudosiert. Zeitgleich wurden in einem getrennten Zulauf 80 g einer 5 Gew.-%igen Wasserstoffperoxidlösung in einem Zeitraum von 150 min zugegeben. Nach Ende des Initiatorzulaufs wurde für 30 min nachpolymerisiert und auf 70°C abgekühlt. Anschließend wurden 10 g einer 10 Gew.-%igen Ascorbinsäurelösung zugegeben und für 20 min nachgerührt. Es erfolgte eine erneute Zugabe von 10 g einer 10 Gew.-%igen Ascorbinsäurelösung. Danach wurde das Reaktionsgemisch für 20 min nachgerührt. Zum Schluss wurden 5 g eines handelsüblichen Entschäumers (Afranil^{®} T der BASF SE) sowie 65 g vollentsalztes Wasser zugegeben und auf Raumtemperatur abgekühlt.

Es wurde eine feinteilige Polymerdispersion mit einem Feststoffgehalt von 30,4 Gew.-% und einem LD-Wert (0,1 %) von 92,2 % erhalten.

### Beispiel 2

In einem 21-Planschilffkolben mit Rührer und Innentemperaturmessung wurden 101,4 g wasserfreie Essigsäure (Eisessig) vorgelegt und unter Stickstoffatmosphäre auf 105 °C aufgeheizt. Unter Rühren wurden 165 g Styrol, 10 g N,N-Dimethylaminoethylacrylat, 55 g N,N-Dimethylaminopropylmethacrylamid sowie 5 g Acrylsäure in einem Zeitraum von 45 min bei 105 °C zudosiert. Zeitgleich mit dem Monomerzulauf wurde der Zulauf von 8,8 g tert.-Butylperoctoat in 18,2 g Isopropanol gestartet und innerhalb von 60 min zudosiert. Das Reaktionsgemisch wurde anschließend bei 105 °C für 60 min nachpolymerisiert.

Die homogene Polymermasse wurde dann bei 85 °C mit 870 g vollentsalztem Wasser versetzt. Nach Zugabe von 1.5 g 10 Gew.-%iger Eisen(II)sulfatlösung und 10g 10 Gew.-%iger Ascorbinsäurelösung wurden 20 g 5 Gew.-%ige Wasserstoffperoxidlösung innerhalb von 30 min bei 80 °C zugegeben. Danach wurde bei 80 °C eine Mischung aus 40 g Styrol und 225 g tert.-Butylacrylat über einen Zeitraum von 120 min zudosiert. Zeitgleich wurden in einem getrennten Zulauf 80 g einer 5 Gew.-%igen Wasserstoffperoxidlösung in einem Zeitraum von 150 min zugegeben. Nach Ende des Initiatorzulaufs wurde für 30 min nachpolymerisiert. Anschließend wurden 5 g einer 10 Gew.-%igen Ascorbinsäurelösung zugegeben. Danach wurden innerhalb von 5 min 20 g einer 5 Gew.-%-igen Wasserstoffperoxidlösung zudosiert. Anschließend wurde das Reaktionsgemisch für 30 min nachgerührt, wobei auf 70 °C abgekühlt wurde. Zum Schluss wurden 5 g eines handelsüblichen Entschäumers (Afranil^{®} T der BASF SE) sowie 65 g vollentsalztes Wasser zugegeben und auf Raumtemperatur abgekühlt.

Es wurde eine feinteilige Polymerdispersion mit einem Feststoffgehalt von 30,3 Gew.-% und einem LD-Wert (0,1 %) von 93,7 % erhalten.

### Beispiel 3

In einem 21-Planschilffkolben mit Rührer und Innentemperaturmessung wurden 101,4 g wasserfreie Essigsäure (Eisessig) vorgelegt und unter Stickstoffatmosphäre auf 105 °C aufgeheizt. Unter Rühren wurden 165 g Styrol, 10 g N,N-Dimethylaminoethylacrylat, 55 g N,N-Dimethylaminopropylmethacrylamid, 5 g Acrylsäure sowie 2,5 g Terpinolen in einem Zeitraum von 45 min bei 105°C zudosiert. Zeitgleich mit dem Monomerzulauf wurde der Zulauf von 8,8 g tert.-Butylperoctoat in 18,2 g Isopropanol gestartet und innerhalb von 60 min zudosiert. Das Reaktionsgemisch wurde anschließend bei 105 °C für 60 min nachpolymerisiert.

Die homogene Polymermasse wurde dann bei 85 °C mit 870 g vollentsalztem Wasser versetzt. Nach Zugabe von 1,5 g 10 Gew.-%iger Eisen(II)sulfatlösung und 10 g 10 Gew.-%-iger Ascorbinsäurelösung wurden 20 g 5 Gew.-%ige Wasserstoffperoxidlösung innerhalb von 30 min bei 80 °C zugegeben. Danach wurde bei 80 °C eine Mischung aus 40 g Styrol und 225 g tert.-Butylacrylat über einen Zeitraum von 120 min zudosiert. Zeitgleich wurden in einem getrennten Zulauf 80 g einer 5 Gew.-%igen Wasserstoffperoxidlösung in einem Zeitraum von 150 min zugegeben. Nach Ende des Initiatorzulaufs wurde für 30 min nachpolymerisiert. Anschließend wurden 5 g einer 10 Gew.-%igen Ascorbinsäurelösung zugegeben. Danach wurden innerhalb von 5 min 20 g einer 5 Gew.-%igen Wasserstoffperoxidlösung zudosiert. Danach wurde das Reaktionsgemisch für 30 min nachgerührt, wobei auf 70°C abgekühlt wurde. Zum Schluss wurden 5 g eines handelsüblichen Entschäumers (Afranil^{®} T der BASF SE) sowie 65 g vollentsalztes Wasser zugegeben und auf Raumtemperatur abgekühlt.

Es wurde eine feinteilige Polymerdispersion mit einem Feststoffgehalt von 29,1 Gew.-% und einem LD-Wert (0,1 %) von 85,8 % erhalten.

### Beispiel 4

In einem 21-Planschilffkolben mit Rührer und Innentemperaturmessung wurden 101,4 g wasserfreie Essigsäure (Eisessig) vorgelegt und unter Stickstoffatmosphäre auf 105 °C aufgeheizt. Unter Rühren wurden 165 g Styrol, 10 g N,N-Dimethylaminoethylacrylat, 55 g N,N-Dimethylaminopropylmethacrylamid sowie 5 g Acrylsäure in einem Zeitraum von 45 min bei 105 °C zudosiert. Zeitgleich mit dem Monomerzulauf wurde der Zulauf von 8,8 g tert.-Butylperoctoat in 18,2 g Isopropanol gestartet und innerhalb von 60 min zudosiert. Das Reaktionsgemisch wurde anschließend bei 105 °C für 60 min nachpolymerisiert.

Die homogene Polymermasse wurde dann bei 85 °C mit 870 g vollentsalztem Wasser versetzt. Nach Zugabe von 1,5 g 10 Gew.-%iger Eisen(II)sulfatlösung und 10 g 10 Gew.-%-iger Ascorbinsäurelösung wurden 20 g 5 Gew.-%ige Wasserstoffperoxidlösung innerhalb von 30 min bei 80 °C zugegeben. Danach wurde bei 80 °C eine Mischung aus 40 g Styrol, 225 g tert.-Butylacrylat sowie 2,5 g Terpinolen über einen Zeitraum von 120 min zudosiert. Zeitgleich wurden in einem getrennten Zulauf 80 g einer 5 Gew.-%igen Wasserstoffperoxidlösung in einem Zeitraum von 150 min zugegeben. Nach Ende des Initiatorzulaufs wurde für 30 min nachpolymerisiert. Anschließend wurden 5 g einer 10 Gew.-%igen Ascorbinsäurelösung zugegeben. Danach wurden innerhalb von 5 min 20 g einer 5 Gew.-%igen Wasserstoffperoxidlösung zudosiert. Danach wurde das Reaktionsgemisch für 30 min nachgerührt, wobei auf 70 °C abgekühlt wurde. Zum Schluss wurden 5 g eines handelsüblichen Entschäumers (Afranil^{®} T der BASF SE) sowie 65 g vollentsalztes Wasser zugegeben und auf Raumtemperatur abgekühlt.

Es wurde eine feinteilige Polymerdispersion mit einem Feststoffgehalt von 26,5 Gew.-% und einem LD-Wert (0,1 %) von 86,7 % erhalten.

### Beispiel 5

In einem 21-Planschilffkolben mit Rührer und Innentemperaturmessung wurden 101,4 g wasserfreie Essigsäure (Eisessig) vorgelegt und unter Stickstoffatmosphäre auf 105 °C aufgeheizt. Unter Rühren wurden 155 g Styrol, 55 g N,N-Dimethylaminoethylacrylat, 10 g N,N-Dimethylaminopropylmethacrylamid sowie 5 g Acrylsäure in einem Zeitraum von 45 min bei 105 °C zudosiert. Zeitgleich mit dem Monomerzulauf wurde der Zulauf von 8,8 g tert.-Butylperoctoat in 18,2 g Isopropanol gestartet und innerhalb von 60 min zudosiert. Das Reaktionsgemisch wurde anschließend bei 105 °C für 60 min nachpolymerisiert.

Die homogene Polymermasse wurde dann bei 85 °C mit 870 g vollentsalztem Wasser versetzt und anschließend auf 75 °C abgekühlt. Nach Zugabe von 1,5 g 10 Gew.-%iger Eisen(II)sulfatlösung und 5 g einer 20 Gew.-%igen Reduktionsmittellösung (Brüggolit® FF6 der Firma Brüggemann) wurden 20 g 5 Gew.-%ige Wasserstoffperoxidlösung innerhalb von 30 min bei 75 °C zugegeben. Danach erfolgte die Zugabe von 35 g Styrol und sofort wurde der Monomerzulauf bestehend aus einer Mischung von 20 g Styrol und 220 g tert.-Butylacrylat gestartet und über einen Zeitraum von 120 min zudosiert. Parallel hierzu wurden 80 g einer 5 Gew.-%igen Wasserstoffperoxidlösung in einem Zeitraum von 150 min in einem getrennten Zulauf zugegeben. Nach Ende des Initiatorzulaufs wurde für 60 min nachpolymerisiert. Anschließend wurden 5 g einer 20 Gew.-%igen Reduktionsmittellösung (Brüggolit® FF6 der Firma Brüggemann) sowie 5 g eines handelsüblichen Entschäumers (Afranil^{®} T der BASF SE) zugegeben und für 30 min nachgerührt. Anschließend wurden erneut 5 g der 20 Gew.-%igen Reduktionsmittellösung (Brüggolit® FF6 der Firma Brüggemann) zugegeben, für 30 min nachgerührt und auf Raumtemperatur abgekühlt.

Es wurde eine feinteilige Polymerdispersion mit einem Feststoffgehalt von 30,3 Gew.-% und einem LD-Wert (0,1 %) von 91,1 Gew.-% erhalten.

### Beispiel 6

In einem 21-Planschilffkolben mit Rührer und Innentemperaturmessung wurden 101,4 g wasserfreie Essigsäure (Eisessig) vorgelegt und unter Stickstoffatmosphäre auf 105 °C aufgeheizt. Unter Rühren wurden 165 g Styrol, 30 g N,N-Dimethylaminoethylacrylat, 5 g N,N-Dimethylaminopropylmethacrylamid, 30 g N,N-Dimethylaminoethylmethacrylat sowie 5 g Acrylsäure in einem Zeitraum von 45 min bei 105 °C zudosiert. Zeitgleich mit dem Monomerzulauf wurde der Zulauf von 8,8 g tert.-Butylperoctoat in 18,2 g Isopropanol gestartet und innerhalb von 60 min zudosiert. Das Reaktionsgemisch wurde anschließend bei 105 °C für 60 min nachpolymerisiert.

Die homogene Polymermasse wurde dann bei 85 °C mit 870 g vollentsalztem Wasser versetzt. Nach Zugabe von 1,5 g 10 Gew.-%iger Eisen(II)sulfatlösung und 10 g 10 Gew.-%iger Ascorbinsäurelösung wurden 20 g 5 Gew.-%ige Wasserstoffperoxidlösung innerhalb von 30 min bei 80 °C zugegeben. Danach wurde bei 80 °C eine Mischung aus 40 g Styrol und 225 g tert.-Butylacrylat über einen Zeitraum von 120 min zudosiert. Zeitgleich wurden in einem getrennten Zulauf 80 g einer 5 Gew.-%-igen Wasserstoffperoxidlösung in einem Zeitraum von 150 min zugegeben. Nach Ende des Initiatorzulaufs wurde für 30 min nachpolymerisiert. Anschließend wurden 5 g einer 10 Gew.-%igen Ascorbinsäurelösung zugegeben. Danach wurden innerhalb von 5 min 20 g einer 5 Gew.-%igen Wasserstoffperoxidlösung zudosiert. Danach wurde das Reaktionsgemisch für 30 min nachgerührt, wobei auf 70°C abgekühlt wurde. Zum Schluss wurden 5 g eines handelsüblichen Entschäumers (Afranil^{®} T der BASF SE) sowie 65 g vollentsalztes Wasser zugegeben und auf Raumtemperatur abgekühlt.

Es wurde eine feinteilige Polymerdispersion mit einem Feststoffgehalt von 30,3 Gew.-% und einem LD-Wert (0,1 %) von 93,7 % erhalten.

### Beispiel 7

In einem 21-Planschilffkolben mit Rührer und Innentemperaturmessung wurden 101,4 g wasserfreie Essigsäure (Eisessig) vorgelegt und unter Stickstoffatmosphäre auf 105 °C aufgeheizt. Unter Rühren wurden 165 g Styrol, 30 g N,N-Dimethylaminoethylacrylat, 5 g N,N-Dimethylaminopropylmethacrylamid, 30 g N,N-Dimethylaminoethylmethacrylat, 5 g Acrylsäure sowie 2,5 g Terpinolen in einem Zeitraum von 45 min bei 105 °C zudosiert. Zeitgleich mit dem Monomerzulauf wurde der Zulauf von 8,8 g tert.-Butyl-peroctoat in 18,2 g Isopropanol gestartet und innerhalb von 60 min zudosiert. Das Reaktionsgemisch wurde anschließend bei 105 °C für 60 min nachpolymerisiert.

Die homogene Polymermasse wurde dann bei 85 °C mit 870 g vollentsalztem Wasser versetzt. Nach Zugabe von 1,5g 10 Gew.-%iger Eisen(II)sulfatlösung und 10 g 10 Gew.-%iger Ascorbinsäurelösung wurden 20 g 5 Gew.-%ige Wasserstoffperoxidlösung innerhalb von 30 min bei 80 °C zugegeben. Danach wurde bei 80 °C eine Mischung aus 40 g Styrol und 225 g tert.-Butylacrylat über einen Zeitraum von 120 min zudosiert. Zeitgleich wurden in einem getrennten Zulauf 80 g einer 5 Gew.-%igen Wasserstoffperoxidlösung in einem Zeitraum von 150 min zugegeben. Nach Ende des Initiatorzulaufs wurde für 30 min nachpolymerisiert. Anschließend wurden 5 g einer 10 Gew.-%igen Ascorbinsäurelösung zugegeben. Danach wurden innerhalb von 5 min 20 g einer 5 Gew.-%igen Wasserstoffperoxidlösung zudosiert. Danach wurde das Reaktionsgemisch für 30 min nachgerührt, wobei auf 70 °C abgekühlt wurde. Zum Schluss wurden 5 g eines handelsüblichen Entschäumers (Afranil^{®} T der BASF SE) sowie 65 g vollentsalztes Wasser zugegeben und auf Raumtemperatur abgekühlt.

Es wurde eine feinteilige Polymerdispersion mit einem Feststoffgehalt von 28,6 Gew.-% und einem LD-Wert (0,1 %) von 82,5 % erhalten.

### Beispiel 8

In einem 21-Planschilffkolben mit Rührer und Innentemperaturmessung wurden 101,4 g wasserfreie Essigsäure (Eisessig) vorgelegt und unter Stickstoffatmosphäre auf 105 °C aufgeheizt. Unter Rühren wurden 165 g Styrol, 30 g N,N-Dimethylaminoethylacrylat, 5 g N,N-Dimethylaminopropylmethacrylamid, 30 g N,N-Dimethylaminoethylmethacrylat sowie 5 g Acrylsäure in einem Zeitraum von 45 min bei 105 °C zudosiert. Zeitgleich mit dem Monomerzulauf wurde der Zulauf von 8,8 g tert.-Butylperoctoat in 18,2 g Isopropanol gestartet und innerhalb von 60 min zudosiert. Das Reaktionsgemisch wurde anschließend bei 105 °C für 60 min nachpolymerisiert.

Die homogene Polymermasse wurde dann bei 85 °C mit 870 g vollentsalztem Wasser versetzt. Nach Zugabe von 1,5 g 10 Gew.-%iger Eisen(II)sulfatlösung und 10 g 10 Gew.-%-iger Ascorbinsäurelösung wurden 20 g 5 Gew.-%ige Wasserstoffperoxidlösung innerhalb von 30 min bei 80 °C zugegeben. Danach wurde bei 80 °C eine Mischung aus 40 g Styrol, 225 g tert.-Butylacrylat sowie 2,5 g Terpinolen über einen Zeitraum von 120 min zudosiert. Zeitgleich wurden in einem getrennten Zulauf 80 g einer 5 Gew.-%igen Wasserstoffperoxidlösung in einem Zeitraum von 150 min zugegeben. Nach Ende des Initiatorzulaufs wurde für 30 min nachpolymerisiert. Anschließend wurden 5 g einer 10 Gew.-%igen Ascorbinsäurelösung zugegeben. Danach wurden innerhalb von 5min 20g einer 5%-igen Wasserstoffperoxidlösung zudosiert. Danach wurde das Reaktionsgemisch für 30 min nachgerührt, wobei auf 70 °C abgekühlt wurde. Zum Schluss wurden 5 g eines handelsüblichen Entschäumers (Afranil^{®} T der BASF SE) sowie 65 g vollentsalztes Wasser zugegeben und auf Raumtemperatur abgekühlt.

Es wurde eine feinteilige Polymerdispersion mit einem Feststoffgehalt von 26,5 Gew.-% und einem LD-Wert (0,1 %) von 88,4 % erhalten.

### Beispiel 9

In einem 21-Planschilffkolben mit Rührer und Innentemperaturmessung wurden 101,4 g wasserfreie Essigsäure (Eisessig) vorgelegt und unter Stickstoffatmosphäre auf 105 °C aufgeheizt. Unter Rühren wurden 165 g Styrol, 30 g N,N-Dimethylaminoethylacrylat, 5 g N,N-Dimethylaminopropylmethacrylamid, 30 g N,N-Dimethylaminoethylmethacrylat sowie 5 g Acrylsäure in einem Zeitraum von 45 min bei 105 °C zudosiert. Zeitgleich mit dem Monomerzulauf wurde der Zulauf von 8,8 g tert.-Butylperoctoat in 18,2 g Isopropanol gestartet und innerhalb von 60 min zudosiert. Das Reaktionsgemisch wurde anschließend bei 105 °C für 60 min nachpolymerisiert.

Die homogene Polymermasse wurde dann bei 85 °C mit 870 g vollentsalztem Wasser versetzt. Nach Zugabe von 1,5 g 10 Gew.-%iger Eisen(II)sulfatlösung und 10 g 10 Gew.-%iger Ascorbinsäurelösung wurden 20 g 5 Gew.-%ige Wasserstoffperoxidlösung innerhalb von 30 min bei 80 °C zugegeben. Danach wurde bei 80 °C eine Mischung aus 40 g Styrol, 225 g tert.-Butylacrylat über einen Zeitraum von 120 min zudosiert. Zeitgleich wurden in einem getrennten Zulauf 80 g einer 5 Gew.-%igen Wasserstoffperoxidlösung in einem Zeitraum von 150 min zugegeben. Nach Ende des Initiatorzulaufs wurde für 30 min nachpolymerisiert. Anschließend wurden 10 g einer 10 Gew.-%igen Ascorbinsäurelösung zugegeben und für 20 min nachgerührt. Danach wurden erneut 10 g einer 10 Gew.-%igen Ascorbinsäurelösung hinzugesetzt und für 20 min nachgerührt. Zum Schluss wurden 5 g eines handelsüblichen Entschäumers (Afranil^{®} T der BASF SE) sowie 65g vollentsalztes Wasser zugegeben und auf Raumtemperatur abgekühlt.

Es wurde eine feinteilige Polymerdispersion mit einem Feststoffgehalt von 29,9 Gew.-% und einem LD-Wert (0,1 %) von 84, 8% erhalten.

### Beispiel 10

In einem 21-Planschilffkolben mit Rührer und Innentemperaturmessung wurden 101,4 g wasserfreie Essigsäure (Eisessig) vorgelegt und unter Stickstoffatmosphäre auf 105 °C aufgeheizt. Unter Rühren wurden 165 g Styrol, 30 g N,N-Dimethylaminoethylacrylat, 5 g N,N-Dimethylaminopropylmethacrylamid, 30 g N,N-Dimethylaminoethylmethacrylat sowie 5 g Acrylsäure in einem Zeitraum von 45 min bei 105 °C zudosiert. Zeitgleich mit dem Monomerzulauf wurde der Zulauf von 8,8 g tert.-Butylperoctoat in 18,2 g Isopropanol gestartet und innerhalb von 60 min zudosiert. Das Reaktionsgemisch wurde anschließend bei 105 °C für 60 min nachpolymerisiert.

Die homogene Polymermasse wurde dann bei 85 °C mit 870 g vollentsalztem Wasser versetzt. Nach Zugabe von 1,5 g 10 Gew.-%iger Eisen(II)sulfatlösung und 10 g 10 Gew.-%iger Ascorbinsäurelösung wurden 20g 5%ige Wasserstoffperoxidlösung innerhalb von 30 min bei 80 °C zugegeben. Danach wurde bei 80 °C eine Mischung aus 53 g Styrol und 212 g tert.-Butylacrylat über einen Zeitraum von 120 min zudosiert. Zeitgleich wurden in einem getrennten Zulauf 80 g einer 5 Gew.-%igen Wasserstoffperoxidlösung in einem Zeitraum von 150 min zugegeben. Nach Ende des Initiatorzulaufs wurde für 30 min nachpolymerisiert. Anschließend wurden 10 g einer 10 Gew.-%igen Ascorbinsäurelösung zugegeben und für 20 min nachgerührt. Danach wurden erneut 10 g einer 10 Gew.-%igen Ascorbinsäurelösung hinzugesetzt und für 20 min nachgerührt. Zum Schluss wurden 5 g eines handelsüblichen Entschäumers (Afranil^{®} T der BASF SE) sowie 65 g vollentsalztes Wasser zugegeben und auf Raumtemperatur abgekühlt.

Es wurde eine feinteilige Polymerdispersion mit einem Feststoffgehalt von 30,4 Gew.-% und einem LD-Wert (0,1 %) von 82,4 % erhalten.

### Beispiel 11

In einem 21-Planschilffkolben mit Rührer und Innentemperaturmessung wurden 101,4 g wasserfreie Essigsäure (Eisessig) vorgelegt und unter Stickstoffatmosphäre auf 105 °C aufgeheizt. Unter Rühren wurden 165 g Styrol, 10 g N,N-Dimethylaminoethylacrylat, 55 g N,N-Dimethylaminopropylmethacrylamid sowie 5 g Acrylsäure in einem Zeitraum von 45 min bei 105 °C zudosiert. Zeitgleich mit dem Monomerzulauf wurde der Zulauf von 8,8 g tert.-Butylperoctoat in 18,2 g Isopropanol gestartet und innerhalb von 60 min zudosiert. Das Reaktionsgemisch wurde anschließend bei 105 °C für 60 min nachpolymerisiert.

Die homogene Polymermasse wurde dann bei 85 °C mit 870 g vollentsalztem Wasser versetzt. Nach Zugabe von 1,5 g 10 Gew.-%iger Eisen(II)sulfatlösung und 10 g 10 Gew.-%iger Ascorbinsäurelösung wurden 20 g 5 Gew.-%ige Wasserstoffperoxidlösung innerhalb von 30 min bei 80 °C zugegeben. Danach wurde bei 80 °C eine Mischung aus 53 g Styrol und 212 g tert.-Butylacrylat über einen Zeitraum von 120 min zudosiert. Zeitgleich wurden in einem getrennten Zulauf 80 g einer 5 Gew.-%igen Wasserstoffperoxidlösung in einem Zeitraum von 150 min zugegeben. Nach Ende des Initiatorzulaufs wurde für 30 min nachpolymerisiert und auf 70°C abgekühlt. Anschließend wurden 10 g einer 10 Gew.-%igen Ascorbinsäurelösung zugegeben und für 20 min nachgerührt. Es erfolgte eine erneute Zugabe von 10 g einer 10%-igen Ascorbinsäurelösung. Danach wurde das Reaktionsgemisch für 20 min nachgerührt. Zum Schluss wurden 5 g eines handelsüblichen Entschäumers (Afranil^{®} T der BASF SE) sowie 65 g vollentsalztes Wasser zugegeben und auf Raumtemperatur abgekühlt.

Es wurde eine feinteilige Polymerdispersion mit einem Feststoffgehalt von 29,8 Gew.-% und einem LD-Wert (0,1 %) von 93,1 % erhalten

### Beispiel 12

In einem 21-Planschilffkolben mit Rührer und Innentemperaturmessung wurden 101,4 g wasserfreie Essigsäure (Eisessig) vorgelegt und unter Stickstoffatmosphäre auf 105 °C aufgeheizt. Unter Rühren wurden 155 g Styrol, 30 g N,N-Dimethylaminoethylacrylat, 5 g N,N-Dimethylaminopropylmethacrylamid, 30 g N,N-Dimethylaminoethylmethacrylat sowie 5 g Acrylsäure in einem Zeitraum von 45 min bei 105 °C zudosiert. Zeitgleich mit dem Monomerzulauf wurde der Zulauf von 8,8 g tert.-Butylperoctoat in 18,2 g Isopropanol gestartet und innerhalb von 60 min zudosiert. Das Reaktionsgemisch wurde anschließend bei 105 °C für 60 min nachpolymerisiert.

Die homogene Polymermasse wurde dann bei 85 °C mit 870 g vollentsalztem Wasser versetzt. Nach Zugabe von 1,5 g 10 Gew.-%iger Eisen(II)sulfatlösung und 10 g 10 Gew.-%iger Ascorbinsäurelösung wurden 20 g 5 Gew.-%ige Wasserstoffperoxidlösung innerhalb von 30 min bei 80 °C zugegeben. Danach wurde bei 80 °C eine Mischung aus 55 g Styrol und 220 g tert.-Butylacrylat über einen Zeitraum von 120 min zudosiert. Zeitgleich wurden in einem getrennten Zulauf 80 g einer 5 Gew.-%igen Wasserstoffperoxidlösung in einem Zeitraum von 150 min zugegeben. Nach Ende des Initiatorzulaufs wurde für 30 min nachpolymerisiert. Anschließend wurden 10 g einer 10 Gew.-%igen Ascorbinsäurelösung zugegeben und für 20 min nachgerührt. Danach wurden erneut 10 g einer 10 Gew.-%igen Ascorbinsäurelösung hinzugesetzt und für 20 min nachgerührt. Zum Schluss wurden 5 g eines handelsüblichen Entschäumers (Afranil^{®} T der BASF SE) sowie 65 g vollentsalztes Wasser zugegeben und auf Raumtemperatur abgekühlt.

Es wurde eine feinteilige Polymerdispersion mit einem Feststoffgehalt von 31,3 Gew.-% und einem LD-Wert (0,1 %) von 74,6 % erhalten.

### Beispiel 13

In einem 21-Planschilffkolben mit Rührer und Innentemperaturmessung wurden 101,4 g wasserfreie Essigsäure (Eisessig) vorgelegt und unter Stickstoffatmosphäre auf 105 °C aufgeheizt. Unter Rühren wurden 155 g Styrol, 10 g N,N-Dimethylaminoethylacrylat, 55 g N,N-Dimethylaminopropylmethacrylamid sowie 5 g Acrylsäure in einem Zeitraum von 45 min bei 105 °C zudosiert. Zeitgleich mit dem Monomerzulauf wurde der Zulauf von 8,8 g tert.-Butylperoctoat in 18,2 g Isopropanol gestartet und innerhalb von 60 min zudosiert. Das Reaktionsgemisch wurde anschließend bei 105 °C für 60 min nachpolymerisiert.

Die homogene Polymermasse wurde dann bei 85 °C mit 870 g vollentsalztem Wasser versetzt. Nach Zugabe von 1,5 g 10 Gew.-%iger Eisen-(II)sulfatlösung und 10 g 10 Gew.-%iger Ascorbinsäurelösung wurden 20 g 5 Gew.-%ige Wasserstoffperoxidlösung innerhalb von 30 min bei 80 °C zugegeben. Danach wurde bei 80 °C eine Mischung aus 55 g Styrol und 220 g tert.-Butylacrylat über einen Zeitraum von 120 min zudosiert. Zeitgleich wurden in einem getrennten Zulauf 80 g einer 5 Gew.-%igen Wasserstoffperoxidlösung in einem Zeitraum von 150 min zugegeben. Nach Ende des Initiatorzulaufs wurde für 30 min nachpolymerisiert und auf 70 °C abgekühlt. Anschließend wurden 10 g einer 10 Gew.-%igen Ascorbinsäurelösung zugegeben und für 20 min nachgerührt. Es erfolgte eine erneute Zugabe von 10 g einer 10 Gew.-%igen Ascorbinsäurelösung. Danach wurde das Reaktionsgemisch für 20 min nachgerührt, Zum Schluss wurden 5 g eines handelsüblichen Entschäumers (Afranil^{®} T der BASF SE) sowie 65 g vollentsalztes Wasser zugegeben und auf Raumtemperatur abgekühlt.

Es wurde eine feinteilige Polymerdispersion mit einem Feststoffgehalt von 30,4 Gew.-% und einem LD-Wert (0,1 %) von 72,6 % erhalten

### Vergleichsbeispiel 1 , gemäß Beispiel 6 aus WO 05/121195 A1

In einem 21-Planschilffkolben mit Rührer und Innentemperaturmessung wurden 101,4g wasserfreie Essigsäure (Eisessig) vorgelegt und unter Stickstoffatmosphäre auf 105 °C aufgeheizt. Unter Rühren wurden 133 g Styrol, 57 g N,N-Dimethylaminoethylmethacrylat sowie 5 g Acrylsäure in einem Zeitraum von 45 min bei 105 °C zudosiert. Zeitgleich mit dem Monomerzulauf wurde der Zulauf von 8,8 g tert.-Butylperoctoat in 18,2 g Isopropanol gestartet und innerhalb von 60 min zudosiert. Das Reaktionsgemisch wurde anschließend bei 105 °C für 30 min nachpolymerisiert.

Die homogene Polymermasse wurde dann bei 60 °C innerhalb von 30 min mit 971,5 g vollentsalztem Wasser versetzt. Nach Zugabe von 7,5 g einer 1 Gew.-%igen Eisen(II)sulfatlösung und 5 g einer 10 Gew.-%-igen Ascorbinsäurelösung wurden 20 g 5 Gew.-%ige Wasserstoffperoxidlösung innerhalb von 30 min zugegeben. Danach wurde bei 60 °C eine Mischung aus 119,2 g Styrol und 119,2 g tert.-Butylacrylat über einen Zeitraum von 120 min zudosiert. Zeitgleich wurden in einem getrennten Zulauf 80 g einer 5 Gew.-%igen Wasserstoffperoxidlösung in einem Zeitraum von 150 min zugegeben. Nach Ende des Initiatorzulaufs wurde für 60 min bei 60 °C nachpolymerisiert und das Reaktionsgemisch anschließend abgekühlt.

Es wurde eine feinteilige Polymerdispersion mit einem Feststoffgehalt von 26,5 Gew.-% und einem LD-Wert (0,1 %) von 87,5 % erhalten.

### Vergleichsbeispiel 2, gemäß Beispiel 8 aus WO 05/121195 A1

In einem 21-Planschilffkolben mit Rührer und Innentemperaturmessung wurden 101,4 g wasserfreie Essigsäure (Eisessig) vorgelegt und unter Stickstoffatmosphäre auf 105 °C aufgeheizt. Unter Rühren wurden 133 g Styrol, 57 g N,N-Dimethylaminoethylacrylat sowie 5 g Acrylsäure in einem Zeitraum von 45 min bei 105 °C zudosiert. Zeitgleich mit dem Monomerzulauf wurde der Zulauf von 8,8 g tert.-Butylperoctoat in 18,2 g Isopropanol gestartet und innerhalb von 60 min zudosiert. Das Reaktionsgemisch wurde anschließend bei 105 °C für 30 min nachpolymerisiert.

Die homogene Polymermasse wurde anschließend bei 60 °C innerhalb von 30 min mit 971,5 g vollentsalztem Wasser versetzt. Nach Zugabe von 7,5 g einer 1 Gew.-%igen Eisen(II)sulfatlösung und 5 g einer 10 Gew.-%-igen Ascorbinsäurelösung wurden 20 g 5 Gew.-%ige Wasserstoffperoxidlösung innerhalb von 30 min zugegeben. Danach wurde bei 60 °C eine Mischung aus 119,2 g Styrol und 119,2 g tert.-Butylacrylat über einen Zeitraum von 120 min zudosiert. Zeitgleich wurden in einem getrennten Zulauf 80 g einer 5 Gew.-%igen Wasserstoffperoxidlösung in einem Zeitraum von 150 min zugegeben. Nach Ende des Initiatorzulaufs wurde für 60 min bei 60 °C nachpolymerisiert und das Reaktionsgemisch anschließend abgekühlt.

Es wurde eine feinteilige Polymerdispersion mit einem Feststoffgehalt von 30,9 Gew.-% und einem LD-Wert (0,1 %) von 56,6 % erhalten.

Anwendungstechnische Prüfungen der nach den Beispielen und den Vergleichsbeispielen erhaltenen Polymerisdispersionen

Zur anwendungstechnischen Prüfung der Oberflächenleimungswirkung wurden die erfindungsgemäßen Dispersionen sowie die Vergleichsdispersionen mittels einer Laborleimpresse auf das Prüfpapier (100 % Altpapier, 80 g/m² Flächenmasse, ungeleimt) aufgetragen. Eine wässrige Lösung einer abgebauten Maisstärke wurde auf die gewünschte Konzentration eingestellt. Zu der Stärkelösung wurden dann die zu prüfenden Dispersionen dosiert, so dass die Leimpressenflotte 60 g/l einer abgebauten Maisstärke sowie 0,1 - 1,5 g/l der Dispersionen enthielt.

Die Leimungswirkung der Dispersionen, die gemäß den Beispielen 1-13 sowie den Vergleichsbeispielen 1 und 2 erhalten wurden, wurde anschließend durch Oberflächenapplikation auf das ungeleimte Prüfpapier ermittelt. Dazu wurde das Papier zweimal durch die Leimpresse geführt, wobei im Mittel eine Zunahme des Gewichts von ca. 65 % erreicht wurde.

Die Trocknung der oberflächengeleimten Papiere erfolgte auf einem Trockenzylinder bei 90 °C. Anschließend wurden die Papiere über Nacht im Klimaraum (23 °C, 50 % rel. Luftfeuchte) aufbewahrt, bevor der Leimungsgrad bestimmt wurde.

Zur Bestimmung des Leimungsgrades der oberflächengeleimten Papiere wurden der Cobb₆₀- sowie der Cobb₁₂₀-Wert nach DIN 53 132 bestimmt. Als Cobb₆₀-Wert ist die Wasseraufnahme des Papierblattes in g/m² nach einem Kontakt mit Wasser und einer Kontaktzeit von 60 s (bzw. 120 s bei Cobb₁₂₀-Wert) definiert. Je niedriger der Cobb-Wert, desto besser ist die Leimungswirkung der eingesetzten Dispersion. Die Prüfergebnisse sind in der folgenden Tabelle zusammengefasst.

**Tabelle**

| | Cobb₆₀-Wert [g/m²] | | | Cobb₁₂₀-Wert [g/m²] |
|---|---|---|---|---|
| Auftragsmenge [g/l] | 0,6 | 0,8 | 1,1 | 1,1 |
| Beispiel 1 | 51 | 32 | 28 | 44 |
| Beispiel 2 | 39 | 34 | 29 | 43 |
| Beispiel 3 | 40 | 35 | 30 | 44 |
| Beispiel 4 | 45 | 30 | 29 | 48 |
| Beispiel 5 | 111 | 70 | 28 | 46 |
| Beispiel 6 | 116 | 82 | 32 | 40 |
| Beispiel 7 | 76 | 35 | 29 | 47 |
| Beispiel 8 | 83 | 38 | 28 | 46 |
| Beispiel 9 | 112 | 96 | 40 | 57 |
| Beispiel 10 | 48 | 33 | 27 | 34 |
| Beispiel 11 | 41 | 29 | 26 | 33 |
| Beispiel 12 | 40 | 30 | 27 | 40 |
| Beispiel 13 | 47 | 29 | 25 | 34 |
| Vergleichsbeispiel 1 | 140 | 120 | 110 | 126 |
| Vergleichsbeispiel 2 | 140 | 125 | 62 | 126 |

## Patentansprüche

1. Feinteilige, kationische, wässrige Polymerdispersionen mit dispergierten Teilchen einer mittleren Teilchengröße von 5 bis 250nm, die erhältlich sind durch Emulsionspolymerisation von ethylenisch ungesättigten Monomeren in einer wässrigen Lösung eines kationischen Vorpolymerisats als Dispergiermittel, **dadurch gekennzeichnet, dass** zunächst das kationische Vorpolymerisat in Gegenwart von Polymerisationsinitiatoren durch Polymerisieren von
(a) 15 bis 40 Gew.-% einer Mischung von mindestens zwei verschiedenen (Meth)acrylsäureestern, die jeweils eine Aminogruppe und/oder quartäre Ammoniumgruppe aufweisen, und/oder (Meth)acrylamiden, die jeweils eine Aminogruppe und/oder quartäre Ammoniumgruppe tragen,
(b) 40 bis 85 Gew.-% mindestens eines gegebenenfalls substituierten Styrols,
(c) 0,5 bis 5 Gew.-% mindestens eines Säuregruppen enthaltenden ethylenisch ungesättigten Monomers und
(d) 0 bis 20 Gew.-% mindestens eines von (b) verschiedenen, nichtionischen, ethylenisch ungesättigten Monomers,
wobei die Summe aus (a) + (b) + (c) + (d) = 100 Gew.-% ergibt,
in einer Lösungspolymerisation in einem mit Wasser teilweise bis vollständig mischbaren Lösemittel hergestellt wird, die Lösung/Dispersion des Vorpolymerisats dann mit Wasser versetzt wird, und dass anschließend in der wässrigen Lösung des Vorpolymerisats eine Emulsionspolymerisation in Gegenwart von Polymerisationsinitiatoren eines Monomerengemisches aus
(i) 0 bis 29 Gew.-% mindestens eines gegebenenfalls substituierten Styrols,
(ii) 50 bis 100 Gew.-% mindestens eines C₁- bis C₁₈-(Meth)acrylsäureesters,
(iii) 0 bis 30 Gew.-% mindestens eines Vinylesters linearer oder verzweigter C₁-C₃₀-Carbonsäuren und
(iv) 0 bis 30 Gew.-% mindestens eines von (i), (ii) und (iii) verschiedenen, nichtionischen ethylenisch ungesättigten Monomers,
wobei die Summe aus (i) + (ii) + (iii) + (iv) = 100 Gew.-% ergibt,
und die Lösungspolymerisation und/oder Emulsionspolymerisation gegebenenfalls in Gegenwart von 0 bis 10 Gew.-% mindestens eines Polymerisationsreglers durchgeführt wird.

2. Feinteilige, *kationische,* wässrige Polymerdispersion nach Anspruch 1, **dadurch gekennzeichnet, dass** das kationische Vorpolymerisat durch Polymerisieren von
(a) 15 bis 40 Gew.-% einer Mischung aus mindestens zwei Verbindungen ausgewählt aus N,N-Dimethylaminopropylmethacrylamid, N,N-Dimethylaminoethylmethacrylat und N,N-Dimethylaminoethylacrylat,
(b) 40 bis 85 Gew.-% Styrol, und
(c) 0,5 bis 5 Gew.-% Acrylsäure und/oder Methacrylsäure
erhältlich ist.

3. Feinteilige, kationische, wässrige Polymerdispersion nach einem der vorstehenden Ansprüche, **dadurch gekennzeichnet, dass** man in der zweiten Polymerisationsstufe ein Monomerengemisch aus
(i) 0 bis 29 Gew.-% Styrol,
(ii) 71 bis 100 Gew.-% n-Butylacrylat, tert.-Butylacrylat oder Mischungen aus n-Butylacrylat und tert.-Butylacrylat im Gewichtsverhältnis 3:1 bis 1:3
der Emulsionspolymerisation unterwirft.

4. Feinteilige, kationische, wässrige Polymerdispersion nach einem der vorstehenden Ansprüche, **dadurch gekennzeichnet, dass** die Lösungspolymerisation und/oder Emulsionspolymerisation in Gegenwart von 0,1 bis 10 Gew.-% mindestens eines Polymerisationsreglers durchgeführt wird.

5. Feinteilige, kationische, wässrige Polymerdispersion nach Anspruch 4, **dadurch gekennzeichnet, dass** als Polymerisationsregler Terpinolen eingesetzt wird.

6. Verfahren zur Herstellung von feinteiligen, kationischen, wässrigen Polymerdispersionen mit dispergierten Teilchen einer mittleren Teilchengröße von 5 bis 250nm nach einem der Ansprüche 1 bis 5 durch eine zweistufige Polymerisationsreaktion, dass zunächst das kationische Vorpolymerisat in Gegenwart von Polymerisationsinitiatoren durch Polymerisieren von
(a) 15 bis 40 Gew.-% einer Mischung von mindestens zwei verschiedenen (Meth)acrylsäureestern, die jeweils eine Aminogruppe und/oder quartäre Ammoniumgruppe aufweisen, und/oder (Meth)acrylamiden, die jeweils eine Aminogruppe und/oder quartäre Ammoniumgruppe tragen,
(b) 40 bis 85 Gew.-% mindestens eines gegebenenfalls substituierten Styrols,
(c) 0,5 bis 5 Gew.-% mindestens eines Säuregruppen enthaltenden ethylenisch ungesättigten Monomers und
(d) 0 bis 20 Gew.-% mindestens eines von (b) verschiedenen, nichtionischen, ethylenisch ungesättigten Monomers,
wobei die Summe aus (a) + (b) + (c) + (d) = 100 Gew.-% ergibt,
in einer Lösungspolymerisation in einem mit Wasser teilweise bis vollständig mischbaren Lösemittel hergestellt wird, die Lösung/Dispersion des Vorpolymerisats dann mit Wasser versetzt wird, und dass anschließend in der wässrigen Lösung des Vorpolymerisats eine Emulsionspolymerisation in Gegenwart von Polymerisationsinitiatoren eines Monomerengemisches aus
(i) 0 bis 29 Gew.-% mindestens eines gegebenenfalls substituierten Styrols,
(ii) 50 bis 100 Gew.-% mindestens eines C₁- bis C₁₈-(Meth)acrylsäureesters,
(iii) 0 bis 30 Gew.-% mindestens eines Vinylesters linearer oder verzweigter C₁-C₃₀-Carbonsäuren und
(iv) 0 bis 30 Gew.-% mindestens eines von (i), (ii) und (iii) verschiedenen, nichtionischen ethylenisch ungesättigten Monomers,
wobei die Summe aus (i) + (ii) + (iii) + (iv) = 100 Gew.-% ergibt,
und die Lösungspolymerisation und/oder Emulsionspolymerisation in Gegenwart von 0 bis 10 Gew.-% mindestens eines Polymerisationsreglers durchgeführt wird.

7. Verwendung der feinteiligen, kationischen, wässrigen Polymerdispersionen nach einem der Ansprüche 1 bis 5 als Leimungsmittel für Papier, Pappe und Karton.

## Claims

1. A finely divided, cationic, aqueous polymer dispersion having dispersed particles of mean particle size from 5 to 250 nm which is obtainable by emulsion polymerization of ethylenically unsaturated monomers in an aqueous solution of a cationic prepolymer as a dispersant, wherein first the cationic prepolymer is prepared in the presence of polymerization initiators by polymerization of
(a) from 15 to 40% by weight of a mixture of at least two different (meth)acrylates which in each case have an amino group and/or quaternary ammonium group and/or (meth)acrylamides which in each case carry an amino group and/or quaternary ammonium group,
(b) from 40 to 85% by weight of at least one optionally substituted styrene,
(c) from 0.5 to 5% by weight of at least one ethylenically unsaturated monomer comprising acid groups and
(d) from 0 to 20% by weight of at least one nonionic, ethylenically unsaturated monomer differing from (b),
the sum of (a) + (b) + (c) + (d) being 100% by weight,
in a solution polymerization in a partly to completely water-miscible solvent, and water is then added to the solution/dispersion of the prepolymer, and thereafter, in the aqueous solution of the prepolymer, an emulsion polymerization is carried out, in the presence of polymerization initiators, of a monomer mixture comprising
(i) from 0 to 29% by weight of at least one optionally substituted styrene,
(ii) from 50 to 100% by weight of at least one C₁- to C₁₈-(meth)acrylate,
(iii) from 0 to 30% by weight of at least one vinyl ester of linear or branched C₁-C₃₀-carboxylic acids and
(iv) from 0 to 30% by weight of at least one nonionic ethylenically unsaturated monomer differing from (i), (ii) and (iii),
the sum of (i) + (ii) + (iii) + (iv) being 100% by weight,
and the solution polymerization and/or emulsion polymerization is optionally carried out in the presence of from 0 to 10% by weight of at least one polymerisation regulator.

2. The finely divided, cationic, aqueous polymer dispersion according to claims 1, wherein the cationic prepolymer, is obtainable by polymerization of
(a) from 15 to 40% by weight of a mixture of at least two compounds selected from N,N-dimethylaminopropylmethacrylamide, N,N-dimethylaminoethyl methacrylate and N,N-dimethylaminoethyl acrylate,
(b) from 40 to 85% by weight of styrene, and
(c) from 0.5 to 5% by weight of acrylic acid and/or methacrylic acid.

3. The finely divided, cationic, aqueous polymer dispersion according to either of the preceding claims, wherein, in the second polymerization stage, a monomer mixture comprising
(i) from 0 to 29% by weight of styrene,
(ii) from 71 to 100% by weight of n-butyl acrylate, tert-butyl acrylate or mixtures of n-butyl acrylate and tert-butyl acrylate in the weight ratio of 3:1 to 1:3
is subjected to the emulsion polymerization.

4. The finely divided, cationic, aqueous polymer dispersion according to any of the preceding claims, wherein the solution polymerization and/or emulsion polymerization is carried out in the presence of from 0.1 to 10% by weight of at least one polymerization regulator.

5. The finely divided, cationic, aqueous polymer dispersion according to claim 4, wherein the polymerization regulator used is a terpinolene.

6. A process for the preparation of finely divided, cationic, aqueous polymer dispersions having dispersed particles of mean particle size from 5 to 250 nm according to any of claims 1 to 5 by a two-stage polymerization reaction, wherein first the cationic prepolymer is prepared in the presence of polymerization initiators by polymerization of
(a) from 15 to 40% by weight of a mixture of at least two different (meth)acrylates which in each case have an amino group and/or quaternary ammonium group and/or (meth)acrylamides which in each case carry an amino group and/or quaternary ammonium group,
(b) from 40 to 85% by weight of at least one optionally substituted styrene,
(c) from 0.5 to 5% by weight of at least one ethylenically unsaturated monomer comprising acid groups and
(d) from 0 to 20% by weight of at least one nonionic, ethylenically unsaturated monomer differing from (b),
the sum of (a) + (b) + (c) + (d) being 100% by weight,
in a solution polymerization in a partly to completely water-miscible solvent, and water is then added to the solution/dispersion of the prepolymer, and thereafter, in the aqueous solution of the prepolymer, an emulsion polymerization is carried out, in the presence of polymerization initiators, of a monomer mixture comprising
(i) from 0 to 29% by weight of at least one optionally substituted styrene,
(ii) from 50 to 100% by weight of at least one C₁ - to C₁₈-(meth)acrylate,
(iii) from 0 to 30% by weight of at least one vinyl ester of linear or branched C₁-C₃₀-carboxylic acids and
(iv) from 0 to 30% by weight of at least one nonionic ethylenically unsaturated monomer differing from (i), (ii) and (iii),
the sum of (i) + (ii) + (iii) + (iv) being 100% by weight,
and the solution polymerization and/or emulsion polymerization is carried out in the presence of from 0 to 10% by weight of at least one polymerization regulator.

7. The use of the finely divided, cationic, aqueous polymer dispersions according to any of claims 1 to 5 as sizes for paper, board and cardboard.

## Revendications

1. Dispersions polymères aqueuses cationiques finement divisées contenant des particules dispersées d'une taille de particule moyenne de 5 à 250 nm, qui peuvent être obtenues par polymérisation en émulsion de monomères éthyléniquement insaturés dans une solution aqueuse d'un prépolymère cationique en tant qu'agent de dispersion, **caractérisées en ce que** le prépolymère cationique est tout d'abord fabriqué en présence d'initiateurs de polymérisation par polymérisation de
(a) 15 à 40 % en poids d'un mélange d'au moins deux esters d'acide (méth)acrylique, qui comprennent chacun un groupe amino et/ou un groupe ammonium quaternaire, et/ou (méth)acrylamides, qui portent chacun un groupe amino et/ou un groupe ammonium quaternaire, différents
(b) 40 à 85 % en poids d'au moins un styrène éventuellement substitué,
(c) 0,5 à 5 % en poids d'au moins un monomère éthyléniquement insaturé contenant des groupes acides, et
(d) 0 à 20 % en poids d'au moins un monomère éthyléniquement insaturé, non ionique, différent de (b),
avec la somme de (a) + (b) + (c) + (d) = 100 % en poids,
par polymérisation en solution dans un solvant miscible partiellement à totalement avec l'eau, la solution/dispersion du prépolymère est ensuite mélangée avec de l'eau, puis une polymérisation en émulsion d'un mélange de monomères constitué par
(i) 0 à 29 % en poids d'au moins un styrène éventuellement substitué,
(ii) 50 à 100 % en poids d'au moins un ester d'acide (méth)acrylique en C₁ à C₁₈,
(iii) 0 à 30 % en poids d'au moins un ester vinylique d'acides carboxyliques en C₁-C₃₀ linéaires ou ramifiés, et
(iv) 0 à 30 % en poids d'au moins un monomère éthyléniquement insaturé, non ionique, différent de (i), (ii) et (iii),
avec la somme de (i) + (ii) + (iii) + (iv) = 100 % en poids,
est réalisée dans la solution aqueuse du prépolymère en présence d'initiateurs de polymérisation, et la polymérisation en solution et/ou la polymérisation en émulsion sont éventuellement réalisées en présence de 0 à 10 % en poids d'au moins un régulateur de polymérisation.

2. Dispersion polymère aqueuse cationique finement divisés selon la revendication 1, **caractérisée en ce que** le prépolymère cationique peut être obtenu par polymérisation de
(a) 15 à 40 % en poids d'un mélange d'au moins deux composés choisis parmi le N,N-diméthylaminopropylméthacrylamide, le méthacrylate de N,N-diméthylaminoéthyle et l'acrylate de N,N-diméthylaminoéthyle,
(b) 40 à 85 % en poids de styrène et
(c) 0,5 à 5% en poids d'acide acrylique et/ou d'acide méthacrylique.

3. Dispersion polymère aqueuse cationique fixement divisée selon l'une quelconque des revendications précédentes, **caractérisée en ce que**, lors de la seconde étape de polymérisation, un mélange de monomères constitué par
(i) 0 à 29 % en poids de styrène,
(ii) 71 à 100 % en poids d'acrylate de n-butyle, d'acrylate de tert.-butyle ou de mélanges d'acrylate de n-butyle et d'acrylate de tert.-butyle en un rapport en poids de 3:1 à 1:3,
est soumis à la polymérisation en émulsion.

4. Dispersion polymère aqueuse cationique finement divisée selon l'une quelconque des revendications précédentes, **caractérisés en ce que** la polymérisation en solution et/ou la polymérisation en émulsion sont réalisées en présence de 0,1 à 10 % et poids d'au moins un régulateur de polymérisation.

5. Dispersion polymère aqueuse cationique finement divisée selon la revendication 4, **caractérisés en ce que** le terpinolène est utilisé en tant que régulateur de polymérisation.

6. Procédé de fabrication de dispersions polymères aqueuses cationiques fixement devisées contenant des particules dispersées d'une taille de particule moyenne de 5 à 250 nm selon l'une quelconque des revendications 1 à 5 par une réaction de polymérisation, à deux étapes, **caractérisé en ce que** le prépolymère cationique est tout d'abord fabriqué en présence d'initiateurs de polymérisation par polymérisation de
(a) 15 à 40 % en poids d'un mélange d'au moins deux esters d'acide (méth)acrylique, qui comprennent chacun un groupe amino et/ou un groupe ammonium quaternaire, et/ou (méth)acrylamides, qui portent chacun un groupe amino et/ou un groupe ammonium quaternaire, différents
(b) 40 à 85 % en poids d'au moins un styrène éventuellement substitué,
(c) 0,5 à 5 % en poids d'au moins un monomère éthyléniquement insaturé contenant des groupes acides, et
(d) 0 à 20 % en poids d'au moins un monomère éthyléniquement insaturé, non ionique, diffèrent de (b),
avec la somme de (a) + (b) + (c) + (d) = 100 % en poids,
par polymérisation en solution dans un solvant miscible partiellement à totalement avec l'eau, la solution/dispersion du prépolymère est ensuite mélangée avec de l'eau, puis une polymérisation en émulsion d'un mélange de monomères constitué par
(i) 0 à 29 % en poids d'au moins un styrène éventuellement substitué,
(ii) 50 à 100 % en poids d'au moins un ester d'acide (méth)acrylique en C₁ à C₁₈,
(iii) 0 à 30 % en poids d'au moins un ester vinylique d'acides carboxyliques en C₁-C₃₀ linéaires ou ramifiés, et
(iv) 0 à 30 % en poids d'au moins un monomère éthyléniquement insaturé, non ionique, différent de (i), (ii) et (iii),
avec la somme de (i) + (ii) + (iii) + (iv) = 100 % en poids,
est réalisée dans la solution aqueuse du prépolymère en présence d'initiateurs de polymérisation, et la polymérisation en solution et/ou la polymérisation en émulsion sont réalisées en présence de 0 à 10 % en poids d'au moins un régulateur de polymérisation.

7. Utilisation des dispersions polymères aqueuses cationiques finement divisées selon l'une quelconque des revendications 1 à 5 en tant qu'agent d'encollage pour papier, bristol et carton.
